# EUROPEAN PATENT APPLICATION

(11) **EP 2 621 182 A1**
(43) Date of publication of application: **31.07.2013**
(21) Application number: 13150650.3
(22) Date of filing: 09.01.2013
(51) Int. Cl.: H04N 21/418, H04N 21/458, H04N 21/81, H04N 21/45

(54) **Display apparatus, apparatus for upgrading display apparatus, display system and data processing method of display system**

(30) Priority: 27.01.2012 KR 20120008220; 30.01.2012 KR 20120008872; 31.01.2012 KR 20120009384; 31.01.2012 KR 20120009448; 25.06.2012 KR 20120067853
(71) Applicant: Samsung Electronics Co., Ltd, Gyeonggi-do 443-742 (KR)
(72) Inventor: Kim, Ji-won, Seoul (KR); Son, Tae-yong, Gyeonggi-do (KR)
(74) Representative: Brandon, Paul Laurence

(57) **Abstract**

A display apparatus and an apparatus for upgrading the display apparatus are provided. The display apparatus includes a display; an image processor processing an image signal received from an image source; a connector to which an upgrade apparatus is connected to and upgrades hardware or software of the display apparatus. The upgrading apparatus may be mounted to the display apparatus, and an image, user interface, or graphic processing route may be changed in order to upgrade hardware or software processes of the display apparatus.

## Description

### CROSS-REFERENCE TO RELATED APPLICATION

This application claims priorities from Korean Patent Applications No. 10-2012-0008220, filed on January 27, 2012, No. 10-2012-0008872, filed on January 30, 2012, No. 10-2012-0009384, filed on January 31, 2012, No. 10-2012-0009448, filed on January 31, 2012 and No. 10-2012-0067853, filed on June 25, 2012 in the Korean Intellectual Property Office, the disclosures of which are incorporated herein by reference.

### BACKGROUND

### Field

Apparatuses and methods consistent with the exemplary embodiments relate to a display apparatus, an apparatus for upgrading the display apparatus, a display system and a data processing method of the display system which displays an image, and more particularly, to a display apparatus of which hardware or software may be upgraded, an apparatus for upgrading the hardware or software of the display apparatus, a display system in which the upgrading apparatus is mounted in the display apparatus and a data processing method of the display system in which the upgrading apparatus is mounted to upgrade hardware or software.

### Description of the Related Art

A display apparatus processes image signals or image data supplied by various external signal supply sources or stored in the display apparatus, and displays an image on a display panel based on the processed image signals or image data. The display apparatus, which is provided to general users, may include a television (TV) or a monitor. For example, the display apparatus, which is implemented as a TV, processes a broadcast signal supplied from an external source, through various image processing operations including decoding and scaling operations, and provides an image of a desired broadcast channel.

The display apparatus has an image processing board built therein which is implemented as a circuit configuration including various chipsets and memories to perform the aforementioned image processing operations.

Over time, the display apparatus has to be upgraded due to various factors including the development of technology. More specifically, the display apparatus should be upgraded to receive an image signal in a new format which was not offered at the time of manufacturing the display apparatus, or to receive an image signal with a resolution that is higher than the level supported by the display apparatus or to reduce system loads to the display apparatus.

Improvement of functions of the display apparatus, i.e., upgrading the display apparatus may be conducted in terms of both hardware and software.

In terms of hardware, all or at least a part of the image processing board installed in the display apparatus should physically be replaced to upgrade the display apparatus. In terms of software, the display apparatus requires hardware designed to drive improved software. After all, general users should purchase a new, upgraded display apparatus.

### SUMMARY

Accordingly, one or more exemplary embodiments provide a display apparatus to which an upgrading apparatus is mounted to upgrade hardware or software, an upgrading apparatus which is mounted in the display apparatus, a display system in which the display apparatus has the upgrading apparatus mounted therein and a data processing method of the display system in which data processing is synchronized according to a change in an image, user interface (UI), or graphic processing route when the upgrading apparatus is mounted in the display apparatus.

Another exemplary embodiment provides a display apparatus of which hardware or software may be upgraded, an upgrading apparatus which upgrades hardware or software of the display apparatus, a display system in which the display apparatus has the upgrading apparatus mounted therein and a data processing synchronization method of the display system which prevents a transient phenomenon as a result of a change in an image, UI, or graphic processing route, and reduces mute time when the upgrading apparatus is mounted in the display apparatus.

Still another exemplary embodiment provides a display apparatus of which hardware or software may be upgraded, an upgrading apparatus which upgrades hardware or software of the display apparatus, a display system in which the display apparatus has the upgrading apparatus mounted therein and a data processing synchronization method of the display system in which the upgrading apparatus is mounted from the outside of display apparatus to upgrade hardware or software and a new UI, orgraphic may apply based on the upgraded hardware or software.

Yet another exemplary embodiment provides a display apparatus of which hardware or software may be upgraded, an upgrading apparatus which upgrades hardware or software of the display apparatus, a display system in which the display apparatus has the upgrading apparatus mounted therein and a data processing synchronization method of the display system in which the upgrading apparatus is mounted from the outside of display apparatus to upgrade hardware or software and a new interface may apply to an input image based on the upgraded hardware or software.

Yet another exemplary embodiment provides a display apparatus of which hardware or software may be upgraded, an upgrading apparatus which upgrades hardware or software of the display apparatus, a display system in which the display apparatus has the upgrading apparatus mounted therein and a data processing synchronization method of the display system in which a controller of the upgrading apparatus is mounted in the display apparatus to upgrade hardware or software, and a controller of the display apparatus are used as a dual core.

Yet another exemplary embodiment provides a display apparatus of which hardware or software may be upgraded, an upgrading apparatus which upgrades hardware or software of the display apparatus, a display system in which the display apparatus has the upgrading apparatus mounted therein and a data processing synchronization method of the display system which has a connection interface to easily add or extend new functions or enhanced functions.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 illustrates an example of a display system according to an exemplary embodiment;

FIG. 2 is a flowchart of processing data by the display system in FIG. 1;

FIG. 3 is a block diagram of a detailed configuration of a display system according to a first exemplary embodiment;

FIG. 4 is a block diagram of a detailed configuration of a display system according to a second exemplary embodiment;

FIG. 5 is a block diagram of a detailed configuration of a display system according to a third exemplary embodiment;

FIG. 6 is a block diagram of a detailed configuration of a display system according to a fourth exemplary embodiment;

FIG. 7 is a block diagram of a detailed configuration of a display system according to a fifth exemplary embodiment;

FIG. 8 is a block diagram of a detailed configuration of a display system according to a sixth exemplary embodiment;

FIG. 9 is a block diagram of a detailed configuration of a display system according to a seventh exemplary embodiment;

FIG. 10 is a block diagram of a detailed configuration of a display system according to an eighth exemplary embodiment;

FIG. 11 is a block diagram of a detailed configuration of a display system according to a ninth exemplary embodiment;

FIG. 12 is a block diagram of a detailed configuration of a display system according to a tenth exemplary embodiment;

FIG. 13 is a block diagram of a detailed configuration of a display system according to an eleventh exemplary embodiment;

FIG. 14 illustrates a data processing flow according to the first exemplary embodiment;

FIG. 15 illustrates a data processing flow according to the second exemplary embodiment;

FIGS. 16 to 23 are flowcharts showing a data processing process in various data input routes in the display system;

FIG. 24 is a flowchart showing a process of controlling a display apparatus by an upgrading apparatus; and

FIG. 25 is a flowchart showing a process of controlling the upgrading apparatus by the display apparatus.

### DETAILED DESCRIPTION OF THE EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

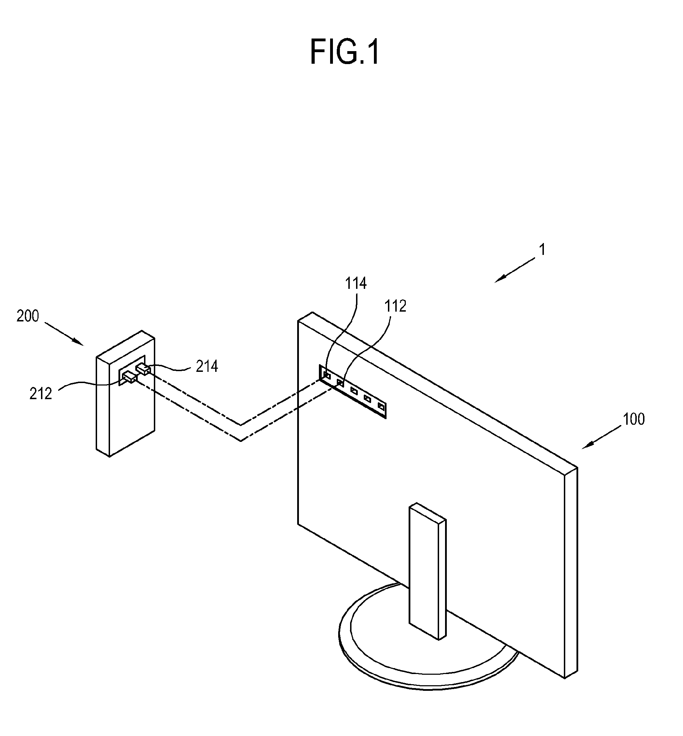

As shown in FIG. 1, a display system 1 according to an exemplary embodiment includes a display apparatus 100 which processes an image signal supplied by an external signal supply source (not shown), according to a signal processing operation, and displays an image based on the processed image signal, and an upgrading apparatus 200 which upgrades hardware or software of the display apparatus 100.

In the display system 1 according to the present exemplary embodiment, the display apparatus 100 is implemented as a TV which displays a broadcast image based on broadcast signals, broadcast information, or broadcast data which are transmitted by transmission equipment of a broadcast station. However, the concept of the disclosure is not limited to the foregoing exemplary embodiment of the display apparatus 100. The display apparatus may include any display which displays an image.

The type of an image which is displayable by the display apparatus 100 is not limited to the broadcast image, and may include a video, still image, applications, on screen display (OSD), or a graphic user interface (GUI) to control various operations, based on signals or data transmitted by various external image sources.

The upgrading apparatus 200 is connected to the display apparatus 100 for communication. The upgrading apparatus 200 upgrades existing hardware or software of the connected display apparatus 100 so that the upgraded hardware or software of the display apparatus 100 processes an image signal and display an image with improved quality.

The upgrading apparatus 200 may be connected to the display apparatus 100 in a wired or wireless manner. The upgrading apparatus 200 according to the present exemplary embodiment may be connected to the display apparatus 100 in a wired manner to exchange data, information, signals, or power with the display apparatus 100. The upgrading apparatus 200 and the display apparatus 100 include connectors or terminals 112, 212, 114 and 214 for mutual physical or electric connection.

The display apparatus 100 may solely process an image signal, which is transmitted from an external source, according to a signal processing operation, and display an image based on the processed image signal. However, the hardware or software of the display system 1 which perform the signal processing operation are upgraded by the connection of the display apparatus 100 and the upgrading apparatus 200, and accordingly, an image with improved quality may be provided.

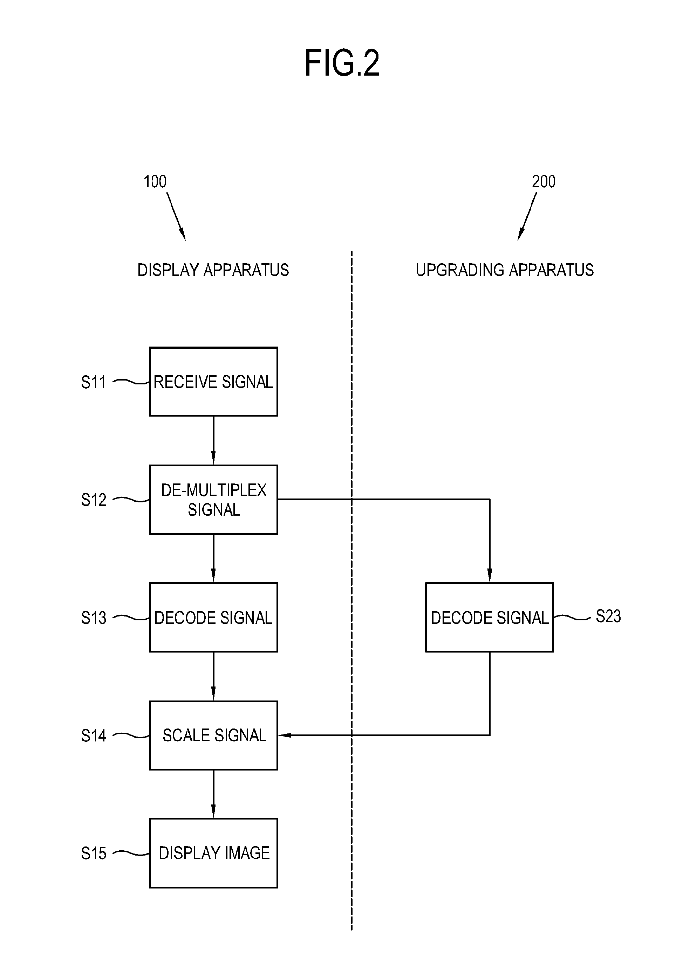

Hereinafter, an upgrading process of the display apparatus 100 according to the exemplary embodiment will be described in detail with reference to FIG. 2. FIG. 2 is a flowchart showing a method of upgrading a signal processing operation of the display apparatus 100 by the upgrading apparatus 200 in the display system 1 according to the present exemplary embodiment.

As shown in FIG. 2, if a signal supply source supplies a predetermined signal, e.g., a broadcast signal (operation S11), the display apparatus 100 processes the broadcast signal according to signal processing operations, including but not limited to, operations S12, S13 and S14 in a preset sequence. The signal processing operations S12, S13 and S14 shown in the drawing are examples which are provided to briefly explain the present exemplary embodiment, but do not represent all of image processing operations performed by the display apparatus 100.

The display apparatus 100 performs a demultiplexing operation which divides the received broadcast signal into an image signal, an audio signal and additional data (operation S12). The display apparatus 100 processes the de-multiplexed signal, e.g., decodes the image signal into a preset image format (operation S13). The display apparatus 100 scales the decoded image signal into a predetermined resolution (operation S14) and displays an image on the display 130 based on the scaled image signal (operation S15).

In the foregoing sequence, the upgrading apparatus 200 may perform a process (operation S23) corresponding to the decoding process (operation S13) of the display apparatus 100. The decoding process (operation S23) of the upgrading apparatus 200 is the same in an operational aspect as the decoding process (operation S13) of the display apparatus 100, but improved in functionality compared to the decoding process (operation S13) thereof. Thus, performing the decoding process (operation S23) rather than the decoding process (operation S13) may result in improvement of the image processing operation.

For example, the decoding process S23 may process an image signal with a resolution that may not be processed by the decoding process (operation S13), process an image signal in a format that may not be processed by the decoding process (operation S13), or apply an additional effect to the image signal that may not be done by the decoding process (operation S13).

As described above, as the upgrading apparatus 200 is mounted in the display apparatus 100, an image, or UI, or graphic processing route may be changed. As a result, failure to synchronize image and graphic processing may cause a transient phenomenon. For example, as a transient phenomenon, a three-dimensional on screen display (OSD) may be displayed in a two-dimensional screen. Taking into account that decrease in image conversion time is a recent trend, it is hard to take a long mute time, and thus image and graphic processing should be synchronized.

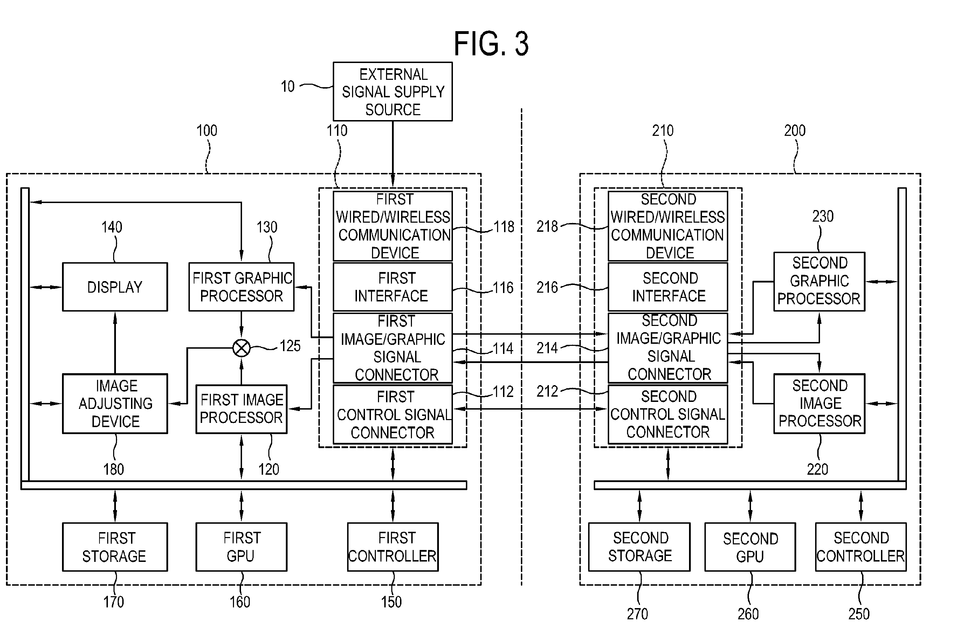

Referring to FIG. 3, the display apparatus 100 and the upgrading apparatus 200 which form the display system 1 according to a first exemplary embodiment will be described.

As shown in FIG. 3, the display apparatus 100 includes a first signal connector 110 which is connected to at least one upgrading apparatus 200 and receives various image signals from an external signal supply source 10, a first image processor 120 which processes the image signal transmitted through the first signal connector 110, a first graphic processor 130 which generates user interface (UI), or graphics based on the input image, a mixer 125 which overlays and mixes image data processed by the image processor 120 and graphic data generated by the first graphic processor 130, a first graphic controller 160 which controls the first graphic processor 130, a first controller 150 which controls overall operations of the display apparatus 100, an image adjusting device 180 which includes a frame rate converter (FRC) to convert an image frame rate before the overlaid and mixed image data and graphic data are displayed on the display 140, a first storage 170 which stores data therein, and the display 140 which displays the converted image thereon.

The first signal connector 110 may include a first control signal connector 110 which transmits or receives a control signal to or from the upgrading apparatus 200 (to be described later), a first image or graphic signal connector 114 which exchanges image or graphic signals with the upgrading apparatus 200, a first interface 116 which is used to input various data from an external source and a first wired or wireless communication device 118.

The first control signal connector 112 may transmit a control signal to the upgrading apparatus 200 to control a second controller of the upgrading apparatus 200 or receive a control signal from the upgrading apparatus 200 to be controlled by the second controller of the upgrading apparatus 200. The first control signal connector 112 may transmit and receive signals or data according to high definition multimedia interface (HDMI) Ethernet Channel (HEC) standards, but not limited thereto. Alternatively, the first control signal connector 112 may transmit and receive signals or data according to HDMI, universal serial bus (USB), Component, and low voltage differential signaling (LVDS) standards or may be provided separately as necessary.

The first image or graphic signal connector 114 may exchange signals or data with the upgrading apparatus 200. For example, the first image or graphic signal connector 114 may receive signals or data according to HDMI, USB, Component, LVDS and HEC standards, and includes a plurality of connection terminals (not shown) corresponding to the foregoing standards. As the connection terminals are connected to various external devices including a signal supply source, communication may be performed through the first signal connector 110. That is, the external device connected to the first signal connector 110 is not limited to the signal supply source, and any device which may exchange signals or data with the display apparatus 100 through the first signal connector 110 may be connected to the first signal connector 110. Thus, according to the present exemplary embodiment, the upgrading apparatus 200 may be connected to the first signal connector 110.

The first interface 116 may receive signals or data from an external source, e.g., from a cable provider, set-top box or personal computer (PC) according to HDMI, USB, Component, LVDS and HEC standards. The first interface 116 may include a tuner to tune and receive a broadcast channel.

The first wired or wireless communication device 118 may include local area network LAN, Wi-Fi, Bluetooth, and Near Field Communication (NFC) to communicate with a PC or a mobile device.

Image or graphic signals are transmitted from an external source to the first image processor 120 and the first graphic processor 130 through the first signal connector 110, and vary depending on a standard or a received image signal or an exemplary type of the signal supply source and the display apparatus 100. The display apparatus 100 may receive image or graphic signals from the upgrading apparatus 200 through the first signal connector 110 or receive image or graphic signals directly from an external source.

Image data and graphic data are transmitted by the upgrading apparatus 200 through the first signal connector 110 and act as a basis for data processing such as overlay or mixing, frame rate conversion, 2D/3D conversion, and mute adjustment.

Following the data processing, a data processing result may be provided as a feedback to the upgrading apparatus 200 through the first signal connector 110.

The first signal connector 110 which receives the image data and graphic data, and the first signal connector 110 which provides the data processing result as a feedback, may be different from each other. For example, the first signal connector 110 which receives the image data and graphic data may use an LVDS interface while the first signal connector 110 which provides the data processing result may use an HDMI interface.

The first image processor 120 processes an image signal transmitted by the first signal connector 110, according to various preset signal processing operations. The first image processor 120 outputs the processed image signal to the display 140 to display an image on the display 140 based on the image signal.

The signal processing operation of the first image processor 120 may include, but not limited to, a de-multiplexing operation for dividing a predetermined signal by nature, a decoding operation corresponding to an image format of an image signal, a de-interlacing operation for converting an interlace image signal into a progressive image signal, a scaling operation for adjusting an image signal into a preset resolution, a noise reduction operation for improving an image quality, a detail enhancement operation, etc.

The first image processor 120 may be implemented as an image processing board (not shown) which is formed by mounting various chipsets (not shown), memories (not shown), electronic parts (not shown), wirings (not shown), etc. on a printed circuit board (PCB) (not shown) to perform the foregoing signal processing operations.

The first graphic processor 130 may generate various user interfaces (UIs) and graphics based on an input image or input data.

The first graphic controller (GPU) 160 controls the first graphic processor 130. The first graphic processor 130 may be formed by a single board, and the first GPU 160, which may be at least one chipset, may be mounted in a graphic board or integrated into a central processing unit (CPU) to control the first graphic processor 130.

The mixer 125 overlays and mixes subtitle data to image data, and mixes audio and video data.

The image adjusting device 180 adjusts data into a suitable form to display an image on the display 140, and may include an FRC for converting a frame rate of image data to express a fast motion, a 2D/3D converter, and a mute adjuster.

The display 140 displays an image thereon based on an image signal output by the first image processor 120. The display 140 may be implemented as various display panels including liquid crystal, plasma, light-emitting diode (LED), organic light-emitting diode (OLED), surface-conduction electron-emitter, carbon nano-tube, and nano-crystal, but is not limited thereto.

The display 140 may further include additional elements depending on its implementation type. For example, the display 140 as an LCD type may include an LCD panel (not shown), a backlight device (not shown) to emit light to the LCD panel, and a panel driving substrate (not shown) to drive the LCD panel (not shown).

The first controller 150 controls various components of the display apparatus 100. For example, the first controller 150 controls the first image processor 120 to process signals, controls the first signal connector 110 to exchange signals, or information, or data, and performs a control operation in response to a command of a user input (not shown) to thereby control entire operations of the display apparatus 100.

The first storage 170 stores therein various data. The first storage 170 may be implemented as a non-volatile memory such as a flash memory or a hard disc drive, but is not limited thereto. The first storage 170 is accessed by the first controller 150, and data stored therein may be read, recorded, modified, deleted, or updated by the first controller 150.

The data which are stored in the first storage 170 include an operating system (OS), and various applications which are executed on the OS, device information regarding the display apparatus 100 and the upgrading apparatus 200, image data, and additional data.

The display apparatus 100 may further include a conversion amplifier (not shown) which converts and amplifies an audio signal divided by the first image processor 120, in a predetermined format and an audio output (not shown) which outputs the amplified audio signal. The audio output may include a speaker.

The display apparatus 100 may further include a user input (not shown) which outputs a preset command according to a user's manipulation. The user input transmits preset various control commands or unlimited information to the first controller 150 by a user's manipulation and input. The user input may be implemented as a menu key and an input panel installed in an external part of the display apparatus 100, or a remote controller which is separated or spaced from the display apparatus 100. The user input may communicate with the display apparatus 100 through NFC such as Bluetooth or infrared communication. In this case, the user input may include a wireless keyboard and a wireless mouse as well as the remote controller. As the case may be, the user input may be integrally formed in the display 140. That is, if the display 140 includes a touch screen, a user may transmit a preset command to the first controller 150 through an input menu (not shown) displayed on the display 140.

According to the first exemplary embodiment, the upgrading apparatus 200, which upgrades the display apparatus 100, is connected to the first signal connector 110 and upgrades at least one of existing hardware and software configurations of the display apparatus 100.

The upgrading apparatus 200 includes hardware or software configurations corresponding to at least a part of hardware or software resources of the display apparatus 100. The configurations of the upgrading apparatus 200 may perform an improved function compared to at least some of the resources of the display apparatus 100. Upon connection to the display apparatus 100, the upgrading apparatus 200 may replace at least one of the existing resources of the display apparatus 100 to ultimately improve the quality of an image displayed by the display apparatus 100.

Hereinafter, a configuration of the upgrading apparatus 200 will be described with reference to FIG. 3.

The upgrading apparatus 200 includes a second signal connector 210 which is connected to the first signal connector 110 of the display apparatus 100, a second image processor 220 which performs operations corresponding to at least one of the image processing operations of the first image processor 120, a second graphic processor 230 which generates graphics or Uls with respect to image information, a second GPU 260 which controls operations of the second graphic processor 230, a second storage 270 which stores data therein, and a second controller 250 which controls overall operations of the upgrading apparatus 200.

The second signal connector 210 may include a second control signal connector 212 which transmits or receives a control signal to or from the display apparatus 100, a second image or graphic signal connector 214 which exchanges image or graphic signals with the display apparatus 100, a second interface 216 which is used to input various data from an external source, and a second wired or wireless communication device 218.

The second control signal connector 212 may be connected to, and transmit a control signal to, the first control signal connector 112 of the display apparatus 100 to control the first controller 150 of the display apparatus 100 or receive a control signal from the display apparatus 100 to be controlled by the first controller 150 of the display apparatus 100. The second control signal connector 212 may transmit and receive signals or data according to HEC standards, but not limited thereto. Alternatively, the second control signal connector 212 may transmit and receive signals or data according to HDMI, USB, Component, and LVDS standards or may be provided separately as necessary.

The second image or graphic signal connector 214 may exchange signals or data with the display apparatus 100. For example, the second image or graphic signal connector 214 may receive signals or data according to HDMI, USB, Component, LVDS and HEC, and includes a plurality of connection terminals (not shown) corresponding to the foregoing standards. As the connection terminals are connected to various external devices including a signal supply source, communication may be performed through the second signal connector 210. That is, the external device connected to the second signal connector 210 is not limited to the signal supply source, and any device which may exchange signals or data with the display apparatus 100 through the second signal connector 210 may be connected to the second signal connector 210. Thus, according to the present exemplary embodiment, the display apparatus 100 may be connected to the second signal connector 210.

The second interface 216 may receive signals or data from an external source, e.g., from a cable provider, set-top box or a PC according to HDMI, USB, Component, LVDS and HEC. The second interface 216 may include a tuner to tune and receive a broadcast channel.

The second wired or wireless communication device 218 may include wireless Internet module, NFC module, LAN module, and USB module, but is not limited thereto.

The wireless Internet module connects the upgrading apparatus 200 to the Internet network through at least one of wireless LAN, Wi-Fi, Wibro and Long Term Evolution (LTE).

The NFC module enables communication between an external device and the upgrading apparatus 200 by Bluetooth and Infrared Data Association (IrDA) protocol. The external device may include a user input device such as a mouse, a keyboard and a remote controller and an audio output device such as an earphone and a speaker. The external device may include a portable electronic device such as a smartphone, a personal digital assistant (PDA) and a laptop computer.

The LAN module connects the upgrading apparatus 200 to a wired Internet network by a cable such as Ethernet Network Interface Card (NIC).

The USB hub may include at least one USB port, and a USB host controller for controlling data input or output with respect to an external device connected to the USB port.

The input external signal includes at least one of an image signal, a broadcast signal, an external control signal and other signals which are needed to extend or improve functions of the display apparatus 100.

The upgrading apparatus 200 may include various external signal input devices to convert an input external signal and provide the signal to the display apparatus 100 to thereby enhance extensibility of the display apparatus 100. That is, such extensibility of the display apparatus 100 is enhanced as the upgrading apparatus 200 processes various external signals which are not processed by the display apparatus 100 and provides the external signals to the display 140.

The second signal connector 210 is connected to the first signal connector 110 to enable communication between the upgrading apparatus 200 and the display apparatus 100. The second signal connector 210 complies with standards corresponding to the first signal connector 110 to be connected to the first signal connector 110. The second signal connector 210 may be connected to at least one of a plurality of connection terminals (not shown) of the first signal connector 110.

The upgrading apparatus 200 may transmit the processed image data and graphic data to the display apparatus 100 through the second signal connector 210. In addition, the received image signal or graphic signal may be transmitted through the second signal connector 210 to, and be processed by, the display apparatus 100 rather than by the upgrading apparatus 200.

After the display apparatus 100 processes the transmitted image data and graphic data, the data processing result may be provided as a feedback to the upgrading apparatus 200 through the second signal connector 210.

The interfaces of the second signal connector 210 which transmits the image data and graphic data, and the second signal connector 210 which receives the data processing result as a feedback may be different from each other. For example, the second signal connector 210 which transmits the image data and graphic data may use an LVDS interface while the second signal connector 210 which receives the data processing result may use an HDMI interface.

The second image processor 220 may perform a second process corresponding to at least a first process of the first image processor 120 of the display apparatus 100. The first and second processes are named for distinction purposes only, and may include a single process or a plurality of unit processes. The second process is improved in functionality compared to the first process and this is realized by improvement of hardware such as chipsets or improvement of software such as algorithms, execution codes, or programs.

The second image processor 220 performs the second process instead of the first process, according to a control of the first controller 150 or the second controller 250, if the display apparatus 100 and the upgrading apparatus 200 are connected to each other. As the signal processing operation is performed, the second process which is improved in functionality compared to the first process may replace the first process, or the first and second processes may be simultaneously performed, resulting in improvement of efficiency in the signal processing operation.

For example, a full HD image which may not be provided by the first image processor 120 may be provided by the second image processor 220. Also, a 3D screen may be implemented through the second image processor 220 instead of the first image processor 120 which may not provide the 3D screen. Such added and extended function is an example and may vary.

The second image processor 220 may reprocess the audio signal as well as the image signal, and the reprocessed and upgraded audio signal may be provided to the display apparatus 100.

The second controller 250 controls a connection operation between the display apparatus 100 and the upgrading apparatus 200 to upgrade the entire signal processing operation. The second controller 250 and the first controller 150 may be implemented as a CPU. If the second controller 250 performs an improved function compared to the first controller 150, the second controller 250 may disable the first controller 150 and control the entire operations of the display system 1 on behalf of the first controller 150.

The second controller 250 may control the entire operations of the display system 1 together with the first controller 150. That is, the second controller 250 may transmit a control signal to the display apparatus 100 through the first and second control signal connectors 112 and 212 and control the first controller 150. Upon receiving a control signal from the upgrading apparatus 200, the first controller 150 may transmit a set of instructions to the upgrading apparatus 200 to enable the second controller 250 to control components of the display apparatus 100 through the first controller 150. The components of the display apparatus 100 may include at least one of the first image processor 120, the first graphic processor 130, the mixer 125, and the image adjusting device 180.

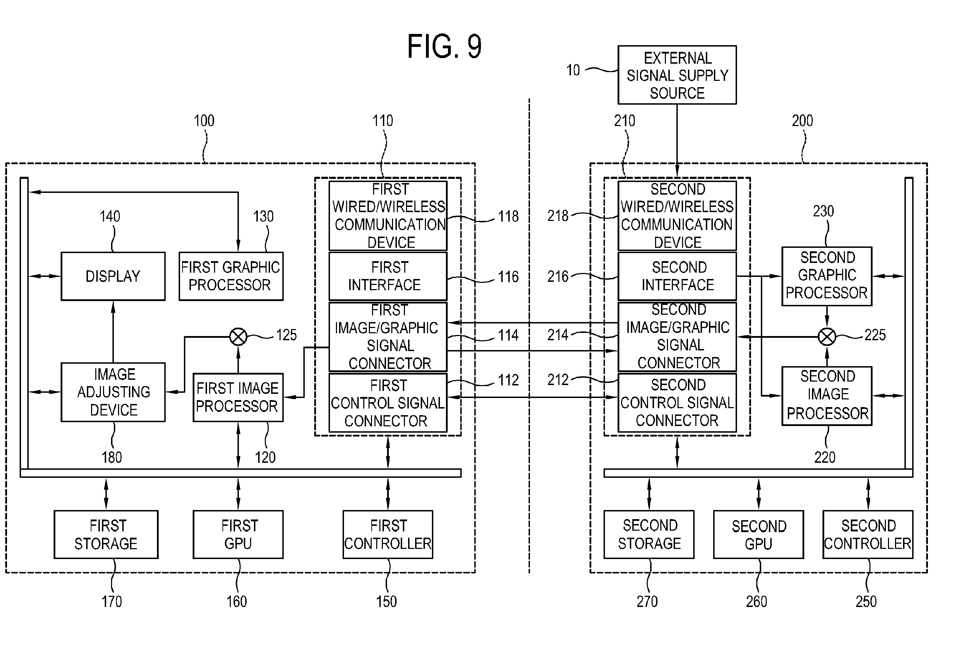

It has been explained that the second controller 250 may control the first controller 150, and on the contrary, the first controller 150 may control the second controller 250. Upon receiving a control signal from the display apparatus 100, the second controller 250 may transmit a set of instructions to the display apparatus 100 and the first controller 150 may control components of the upgrading apparatus 200. The components of the upgrading apparatus 200 may include the second image processor 220, the second graphic processor 230, and a second mixer 225 (refer to FIG. 9).

The second graphic processor 230 may generate various UIs and graphics based on input image information or input graphic data.

The second GPU 260 controls the second graphic processor 230. The second graphic processor 230 may be formed by a single board, and the second GPU 260 as at least one chipset may be mounted in a graphic board or integrated into a CPU to control the second graphic processor 230.

The upgrading apparatus 200 may further include a power converter (not shown) to convert power supplied by the display apparatus 100, into power necessary for its operation. If the display apparatus 100 converts and transmits all power as required by the upgrading apparatus 200, the power converter may be omitted.

The upgrading apparatus 200 may receive driving power as needed for its operation, from the display apparatus 100 through a USB. The upgrading apparatus 200 may receive additional external power (commercial power or battery).

In FIG. 3, image or audio signals which are input through the first interface 116 of the display apparatus 100 may be transmitted to the second image or graphic signal connector 214 of the upgrading apparatus 200 through the first image or graphic signal connector 114. The image or audio signal which are transmitted to the second image or graphic signal connector 214 are processed by the second image processor 220 and the second graphic processor 230 and then transmitted to the first image or graphic signal connector 114 of the display apparatus 100 through the second image or graphic signal connector 214. The route for transmitting the image or audio signals from the first interface 116 of the display apparatus 100 to the upgrading apparatus 200 and the route for transmitting the processed image or audio signals from the second image processor 220 and the second graphic processor 230 to the display apparatus 100 may be an identical route or different routes.

The image or audio data and graphic data which are processed by the upgrading apparatus 200 and transmitted back to the display apparatus 100 are transmitted to the first image processor 120 and the first graphic processor 130 of the display apparatus 100. The first controller 150 transmits the image data and graphic data, which have been transmitted to the first image processor 120 and the first graphic processor 130 of the display apparatus 100, to the mixer 125 through a communication line only, bypassing the first image processor 120 and the first graphic processor 130.

The first controller 150 of the display apparatus 100 may control the image adjusting device 180 to process the image data or graphic data input by the upgrading apparatus 200 and display the processed image data or graphic data on the display 140. That is, the image adjusting device 180 may perform FRC for converting a frame rate of image data to express a fast motion, 2D/3D conversion and mute adjustment.

The image signal which is input through the first signal connector 110 of the display apparatus 100 is transmitted, together with image information, to the second image processor 220 of the upgrading apparatus 200 through the first signal connector 110 and the second signal connector 210.

The second graphic processor 230 of the upgrading apparatus 200 provides a data processing result of graphic data as a feedback, which is generated on the basis of the image information, to the display apparatus 100 through the second signal connector 210 and the first signal connector 110.

The first controller 150 of the display apparatus 100 may control the data processing of the display apparatus 100 in sync with the data processing of the upgrading apparatus 200, based on the input data processing result. For example, the data processing of the display apparatus 100 may include those performed by an FRC device, a 2D/3D converter, and a mute adjuster.

The data processing result which is provided by the upgrading apparatus 200 to the display apparatus 200 is not limited to the graphic data processing, and may further include an image data processing result.

Upon connection of the upgrading apparatus 200, the display apparatus 100 transmits device information stored in the first storage 170 of the display apparatus 100, to the upgrading apparatus 200. Based on the device information of the display apparatus 100, the upgrading apparatus 200 determines whether the input image or audio signals and graphic signal have a format that can be processed by the display apparatus 100. If the input image or audio signals and graphic signal have a format that can be processed by the display apparatus 100, they may be transmitted through the first and second signal connectors 110 and 210 and processed by the display apparatus 100. In this case, the upgrading apparatus 200 may take precedence over the display apparatus 100 in processing those signals according to predetermined standards, or both the upgrading apparatus 200 and the display apparatus 100 may simultaneously process the signals.

If the format may not be processed by the display apparatus 100, the signals are processed by the upgrading apparatus 200 and transmitted to the display apparatus 100. The image or graphic data which have been processed by the upgrading apparatus 200 bypass the first image processor 120 and the first graphic processor 130 of the display apparatus 100 and are transmitted directly to the mixer 125.

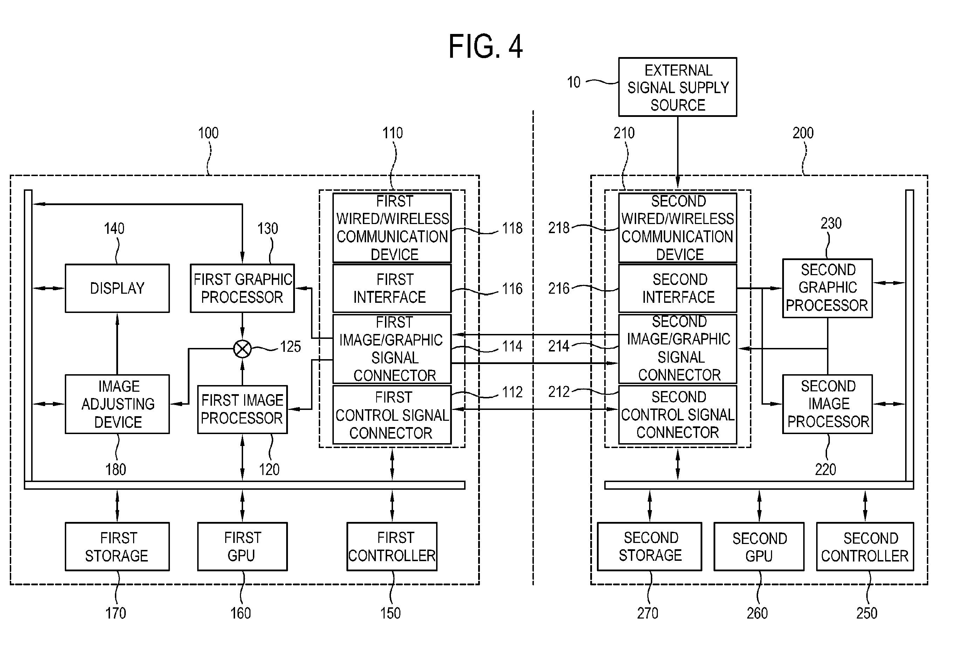

FIG. 4 is a block diagram showing a data processing according to a second exemplary embodiment. Image or audio signals and graphic signal may be input by the external signal supply source 10 through the second interface 216 of the upgrading apparatus 200. The second controller 250 determines whether the image or audio signals and graphic signal which have been input through the second interface 216 of the upgrading apparatus 200 should be processed or are already processed data. If the input image or audio signals and graphic signal should be processed, the second controller 250 determines whether they should be processed by the display apparatus 100 or the upgrading apparatus 200.

After receiving and processing the image signals and graphic data, the display apparatus 100 provides the upgrading apparatus 200 with the data processing result as a feedback. The data processing result of the display apparatus 100 may include those by at least one of the first image processor 120, the first graphic processor 130, the mixer 125, the FRC, the 2D/3D converter, and the mute adjuster.

Based on the data processing result provided as a feedback, the second controller 250 of the upgrading apparatus 200 may control the data processing to synchronize with the data processing of the upgrading apparatus 200.

The synchronized data processing of the upgrading apparatus 200 may include image processing by the second image processor 220 and generation of a graphic UI by the second graphic processor 230.

In the exemplary embodiment in FIG. 3, the data processing result of the upgrading apparatus 200 is provided to the display apparatus 100, and based on the provided data processing result, the first controller controls the data synchronization processing. In the exemplary embodiment in FIG. 4, the data processing result of the display apparatus 100 is provided to the upgrading apparatus 200 and the second controller controls the data synchronization processing based on the data processing result. However, rather than reflecting the data processing result of either the display apparatus 100 or the upgrading apparatus 200, the display apparatus 100 and the upgrading apparatus 200 may exchange the data processing result.

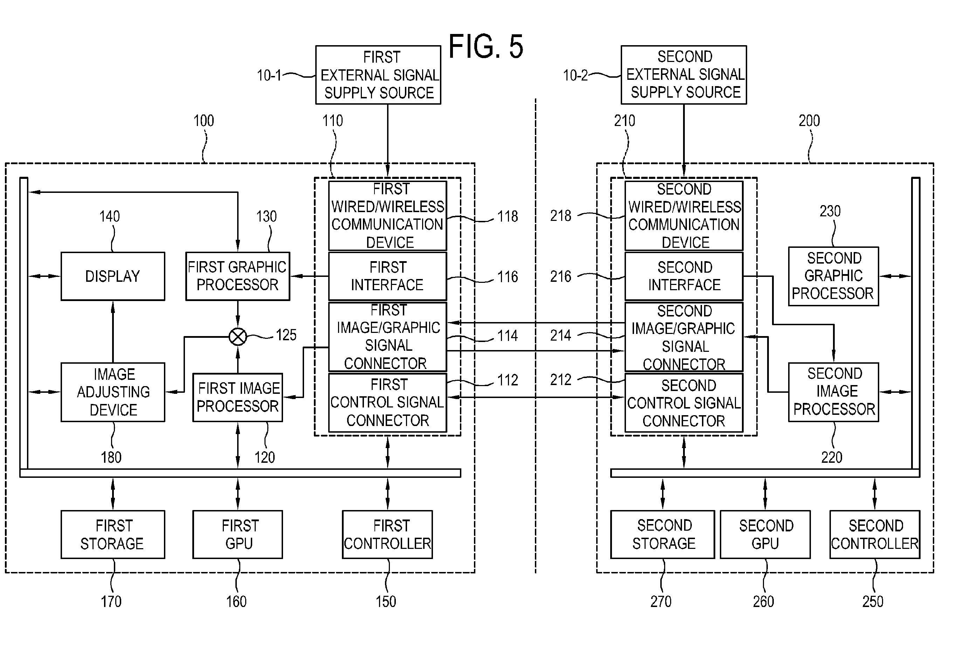

In a display system 1 according to a third exemplary embodiment as shown in FIG. 5, a graphic signal may be legacy input through the first interface 116 of the display apparatus 100 and an image signal may be input through the second interface 216 of the upgrading apparatus 200.

The graphic signal which is legacy input through the first interface 116 of the display apparatus 100 is transmitted to the first graphic processor 130, which may generate graphics or UIs based on the received graphic signal.

The image signal which is input through the second interface 216 of the upgrading apparatus 200 may be transmitted to and processed by the second image processor 220. The image data which are processed by the second image processor 220 are transmitted to the first image processor 120 of the display apparatus 100 through the first and second image or graphic signal connectors 114 and 214. The first controller 150 of the display apparatus 100 may transmit the image data from the upgrading apparatus 200 to the mixer 125 through a communication line only, bypassing the first image processor 120 of the display apparatus 100.

The mixer 125 mixes the image data, which have bypassed the first image processor 120, and the graphics or UIs processed by the first graphic processor 130 and transmits the mixed image and graphic data to the image adjusting device 180.

The image adjusting device 180 adjusts and displays on the display 140 the mixed image and graphic data.

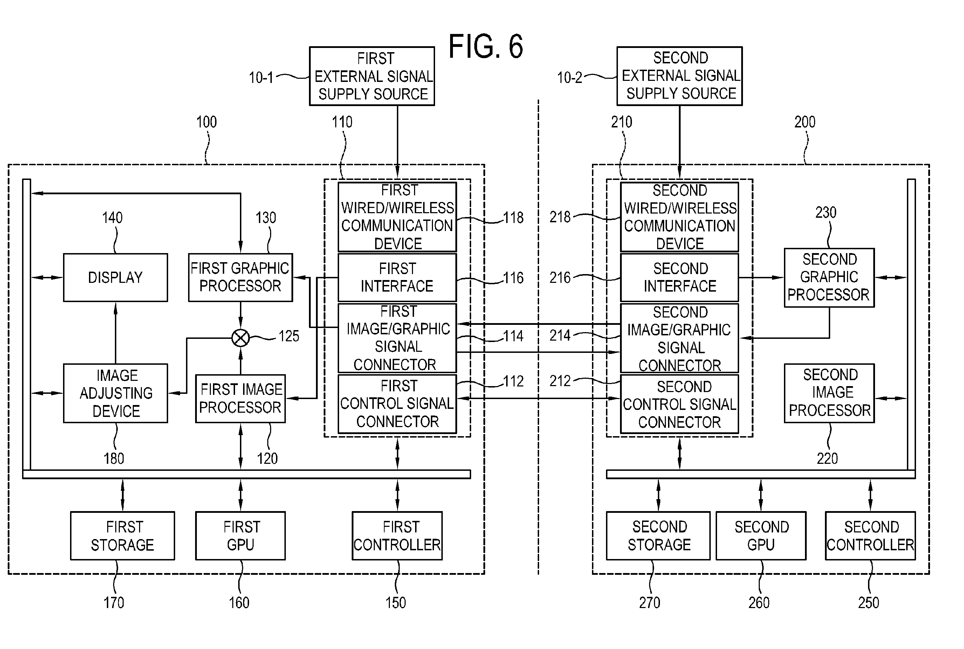

In a display system 1 according to a fourth exemplary embodiment as shown in FIG. 6, an image signal may be legacy input through the first interface 116 of the display apparatus 100 and a graphic signal may be input through the second interface 216 of the upgrading apparatus 200.

The image signal which is legacy input through the first interface 116 of the display apparatus 100 may be transmitted to, and processed by, the first image processor 120.

The graphic signal which is input through the second interface 216 of the upgrading apparatus 200 may be transmitted to, and processed by, the second graphic processor 230. The graphic data which have been processed by the second graphic processor 230 are transmitted to the first graphic processor 130 of the display apparatus 100 through the first and second image or graphic signal connectors 114 and 214. The first controller 150 of the display apparatus 100 may transmit the graphic data from the upgrading apparatus 200 to the mixer 125 through a communication line only, bypassing the first graphic processor 130 of the display apparatus 100.

The mixer 125 mixes the graphic data, which have bypassed the first graphic processor 130, and the image data processed by the first image processor 120 and transmits the mixed image and graphic data to the image adjusting device 180.

The image adjusting device 180 adjusts and displays on the display 140 the mixed image and graphic data.

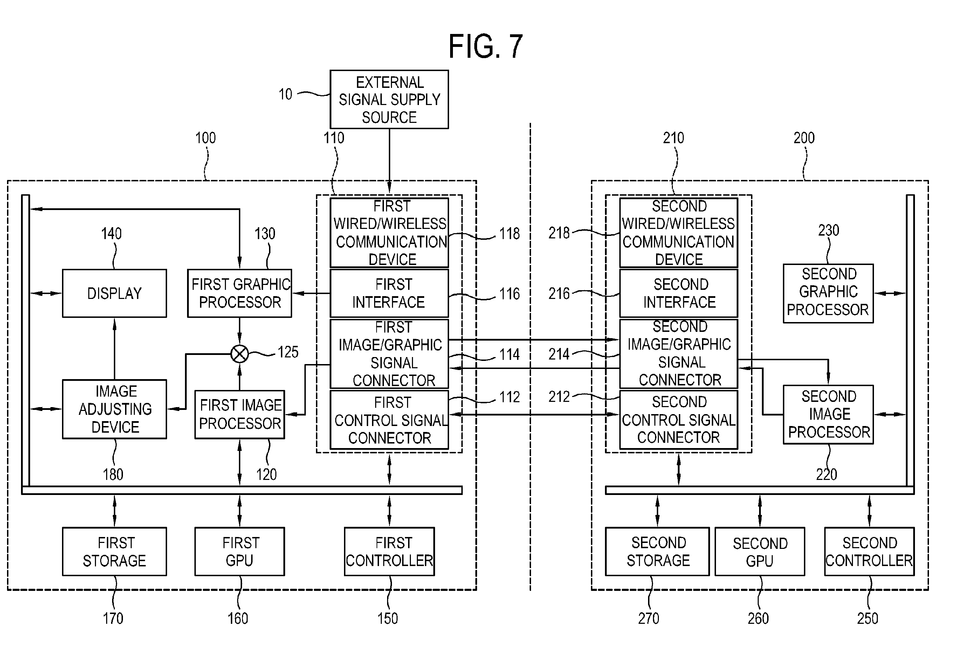

In a display system 1 according to a fifth exemplary embodiment as shown in FIG. 7, an image signal and a graphic signal may be legacy input from the external signal supply source 10 through the first interface 116 of the display apparatus 100.

The graphic signal which is legacy input through the first interface 116 of the display apparatus 100 is transmitted to, and processed by, the first graphic processor 130 of the display apparatus 100.

The image signal which is input through the first interface 116 of the display apparatus 100 may be transmitted to and processed by the second image processor 220 of the upgrading apparatus 200 through the first and second image or graphic signal connectors 114 and 214. The image data which have been processed by the second image processor 220 of the upgrading apparatus 200 are transmitted back to the first image processor 120 of the display apparatus 100 through the first and second image or graphic signal connectors 114 and 214.

The first controller 150 of the display apparatus 100 may transmit the image data from the upgrading apparatus 200 to the mixer 125 through a communication line only, bypassing the first image processor 120 of the display apparatus 100.

The mixer 125 mixes the image data, which have bypassed the first image processor 120, and the graphics/UIs processed by the first graphic processor 130 and transmits the mixed image and graphic data to the image adjusting device 180.

The image adjusting device 180 adjusts and displays on the display 140 the mixed image and graphic data.

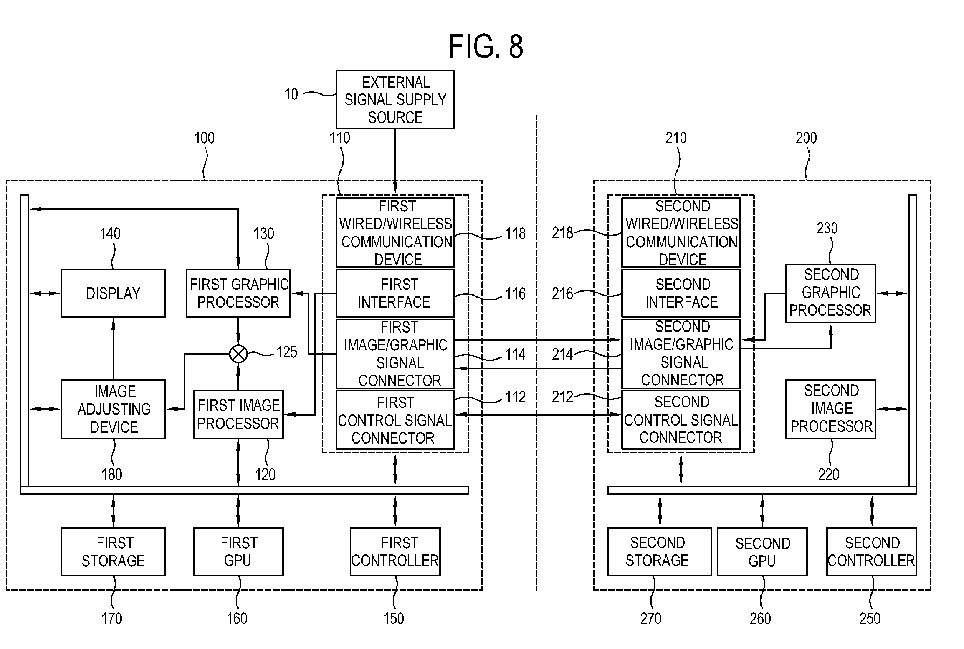

In a display system 1 according to a sixth exemplary embodiment as shown in FIG. 8, an image signal and a graphic signal may be legacy input from the external signal supply source 10 through the first interface 116 of the display apparatus 100.

The image signal which is legacy input through the first interface 116 of the display apparatus 100 may be transmitted to, and processed by, the first image processor 120 of the display apparatus 100.

The graphic signal which is legacy input through the first interface 116 of the display apparatus 100 may be transmitted to, and processed by, the second graphic processor 230 of the upgrading apparatus 200 through the first and second image or graphic signal connectors 114 and 214. The graphic data which have been processed by the second graphic processor 230 of the upgrading apparatus 200 are transmitted back to the first graphic processor 130 of the display apparatus 100 through the first and second image or graphic signal connectors 114 and 214.

The first controller 150 of the display apparatus 100 may transmit the graphic data from the upgrading apparatus 200 to the mixer 125 through a communication line only, bypassing the first graphic processor 130 of the display apparatus 100.

The mixer 125 mixes the graphic data, which have bypassed the first graphic processor 130, and the image data processed by the first image processor 120 and transmits the mixed image and graphic data to the image adjusting device 180. The image adjusting device 180 adjusts and displays on the display 140 the mixed image and graphic data.

In a display system 1 according to a seventh exemplary embodiment as shown in FIG. 9, an image signal and a graphic signal may be input from the external signal supply source 10 through the second interface 216 of the upgrading apparatus 200.

The image signal which is input through the second interface 216 of the upgrading apparatus 200 may be transmitted to and processed by the second image processor 120 of the upgrading apparatus 200.

The graphic signal which is input through the second interface 216 of the upgrading apparatus 200 may be transmitted to and processed by the second graphic processor 230.

The image data and the graphic data which have been processed by the second image processor 220 and the second graphic processor 230, respectively, may be transmitted to and mixed by the second mixer 225. The mixed image data and graphic data may be transmitted to the first image processor 120 of the display apparatus 100 through the first and second image or graphic signal connectors 114 and 214.

The first controller 150 of the display apparatus 100 transmits the mixed image data and graphic data from the upgrading apparatus 200 to the image adjusting device 180 through a communication line only, bypassing the first image processor 120 and the first mixer 125 of the display apparatus 100. As the mixed image data and graphic data which have been transmitted by the upgrading apparatus 200 use only the communication line of the first image processor 120, they may be transmitted to the first graphic processor 130 rather than the first image processor 120.

The image adjusting device 180 adjusts and displays on the display 140 the mixed image and graphic data.

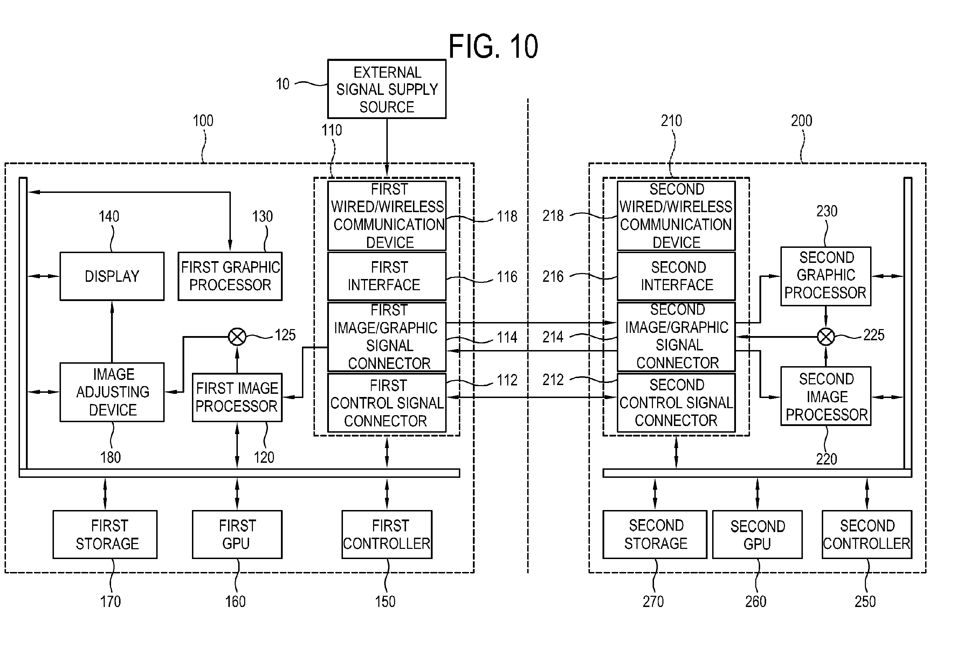

In a display system 1 according to an eighth exemplary embodiment as shown in FIG. 10, an image signal and a graphic signal may be legacy input from the external signal supply source 10 through the first interface 116 of the display apparatus 100.

The image signal and the graphic signal which are legacy input through the first interface 116 of the display apparatus 100 may be transmitted to, and processed by, the second image processor 220 and the second graphic processor 230 of the upgrading apparatus 200 through the first and second image or graphic signal connectors 114 and 214.

The image data and the graphic data which have been processed by the second image processor 220 and the second graphic processor 230, respectively, may be transmitted to, and mixed by, the second mixer 225. The mixed image data and graphic data may be transmitted to the first image processor 120 of the display apparatus 100 through the first and second image or graphic signal connectors 114 and 214.

The first controller 150 of the display apparatus 100 transmits the mixed image data and graphic data from the upgrading apparatus 200 to the image adjusting device 180 through a communication line only, bypassing the first image processor 120 and the first mixer 125 of the display apparatus 100. As the mixed image data and graphic data which have been transmitted by the upgrading apparatus 200 use only the communication line of the first image processor 120, they may be transmitted to the first graphic processor 130 rather than the first image processor 120.

The image adjusting device 180 adjusts and displays on the display 140 the mixed image and graphic data.

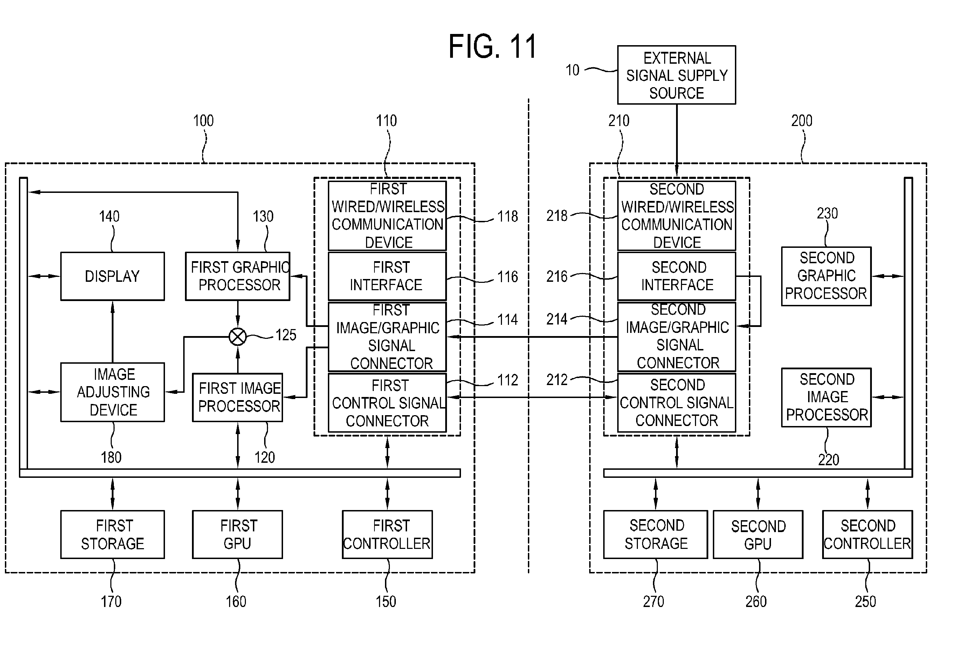

In a display system 1 according to a ninth exemplary embodiment as shown in FIG. 11, an image signal and a graphic signal may be input through the second interface 216 of the upgrading apparatus 200.

Based on the device information of the display apparatus 100 stored in the second storage 270, the second controller 250 of the upgrading apparatus 200 may determine whether the input image signal and graphic signal can be processed by the display apparatus 100. The second interface 216 of the upgrading apparatus 200 may include a plurality of input terminals, and after the input of a plurality of image signals and graphic signals, some of those signals may be processed by the upgrading apparatus 200 while others may be processed by the display apparatus 100.

Instead of processing the input image signal and graphic signal, the upgrading apparatus 200 may transmit those signals to the first image processor 120 and the first graphic processor 130 of the display apparatus 100 through the first and second image or graphic signal connectors 114 and 214.

The image data and graphic data which have been processed by the first image processor 120 and the first graphic processor 130, respectively, may be transmitted to, and mixed by, the first mixer 125. The mixed image data and graphic data may be transmitted to the image adjusting device 180.

The image adjusting device 180 adjusts and displays on the display 140 the mixed image and graphic data.

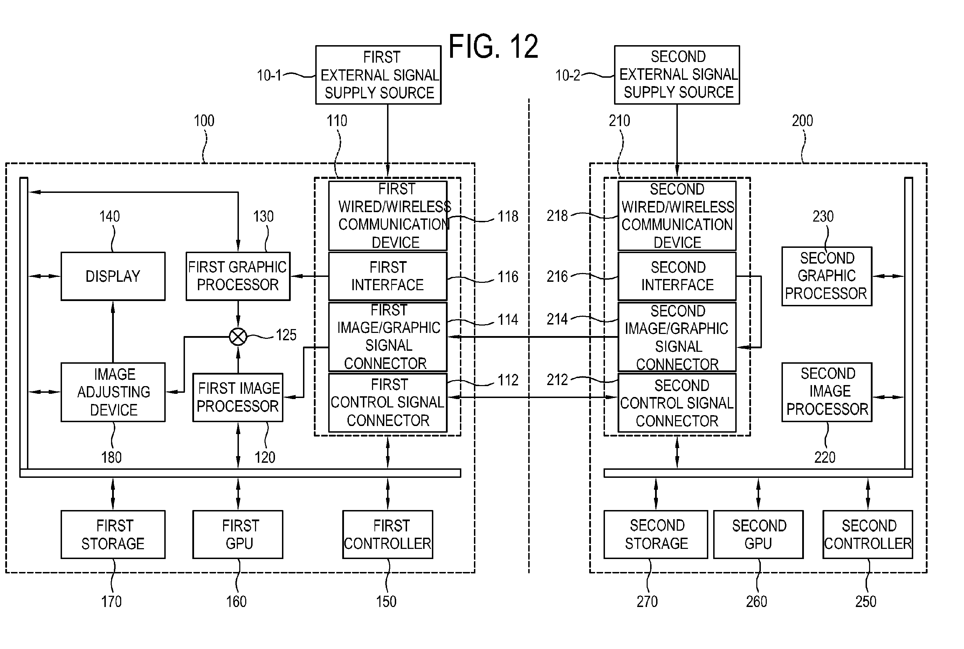

In a display system 1 according to a tenth exemplary embodiment as shown in FIG. 12, a graphic signal may be input through the first interface 116 of the display apparatus 100 and an image signal may be input through the second interface 216 of the upgrading apparatus 200.

The graphic signal input through the first interface 116 of the display apparatus 100 may be transmitted to, and processed by, the first graphic processor 130.

Based on the device information of the display apparatus 100 stored in the second storage 270, the second controller 250 of the upgrading apparatus 200 may determine whether the input image signal can be processed by the display apparatus 100. The second interface 216 of the upgrading apparatus 200 may include a plurality of input terminals, and after the input of a plurality of image signals, some of those signals may be processed by the upgrading apparatus 200 while the other may be processed by the first image processor 120 of the display apparatus 100.

If the image signal can be processed by the display apparatus 100, the upgrading apparatus 200 may transmit the input image signal to the first image processor 120 of the display apparatus 100 through the first and second image or graphic signal connectors 114 and 214 rather than processing the image signal by itself.

The image data and graphic data which have been processed by the first image processor 120 and the first graphic processor 130, respectively, may be transmitted to, and mixed by, the first mixer 125. The mixed image data and graphic data may be transmitted to the image adjusting device 180.

The image adjusting device 180 adjusts and displays on the display 140 the mixed image and graphic data.

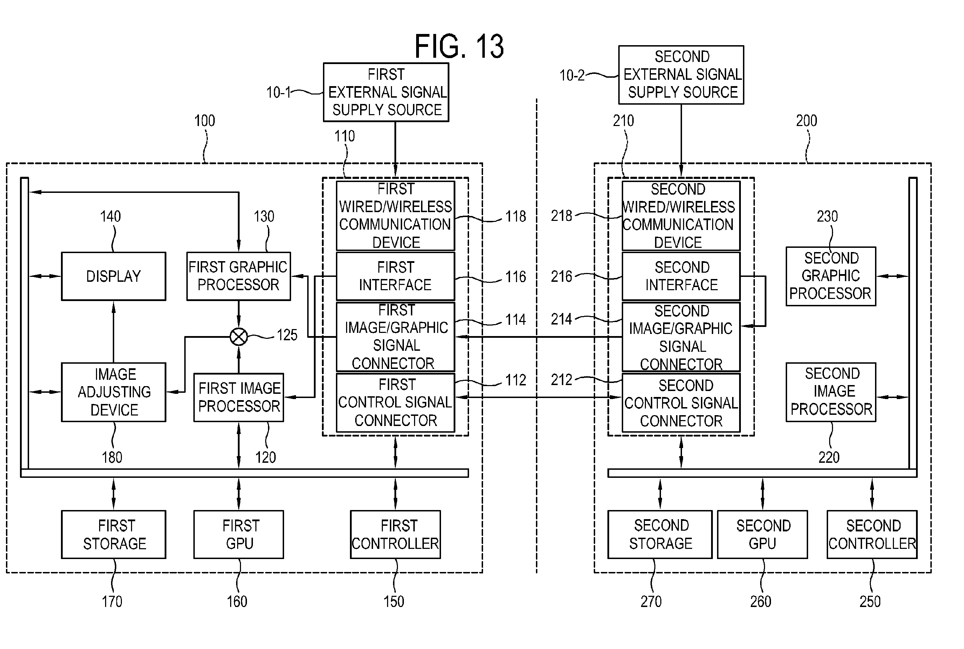

In a display system 1 according to an eleventh exemplary embodiment as shown in FIG. 13, an image signal may be input through the first interface 116 of the display apparatus 100 and a graphic signal may be input through the second interface 216 of the upgrading apparatus 200.

The image signal which is input through the first interface 116 of the display apparatus 100 may be transmitted to and processed by the first image processor 120.

Based on the device information of the display apparatus 100 stored in the second storage 270, the second controller 250 of the upgrading apparatus 200 may determine whether the input graphic signal can be processed by the display apparatus 100. The second interface 216 of the upgrading apparatus 200 may include a plurality of input terminals, and after the input of a plurality of graphic signals, some of those signals may be processed by the upgrading apparatus 200 while others may be processed by the first graphic processor 130 of the display apparatus 100.

If the graphic signal can be processed by the display apparatus 100, the upgrading apparatus 200 may transmit the input graphic signal to the first graphic processor 130 of the display apparatus 100 through the first and second image or graphic signal connectors 114 and 214 rather than processing the graphic signal by itself.

The image data and graphic data which have been processed by the first image processor 120 and the first graphic processor 130, respectively, may be transmitted to and mixed by the first mixer 125. The mixed image data and graphic data may be transmitted to the image adjusting device 180.

The image adjusting device 180 adjusts and displays on the display 140 the mixed image and graphic data.

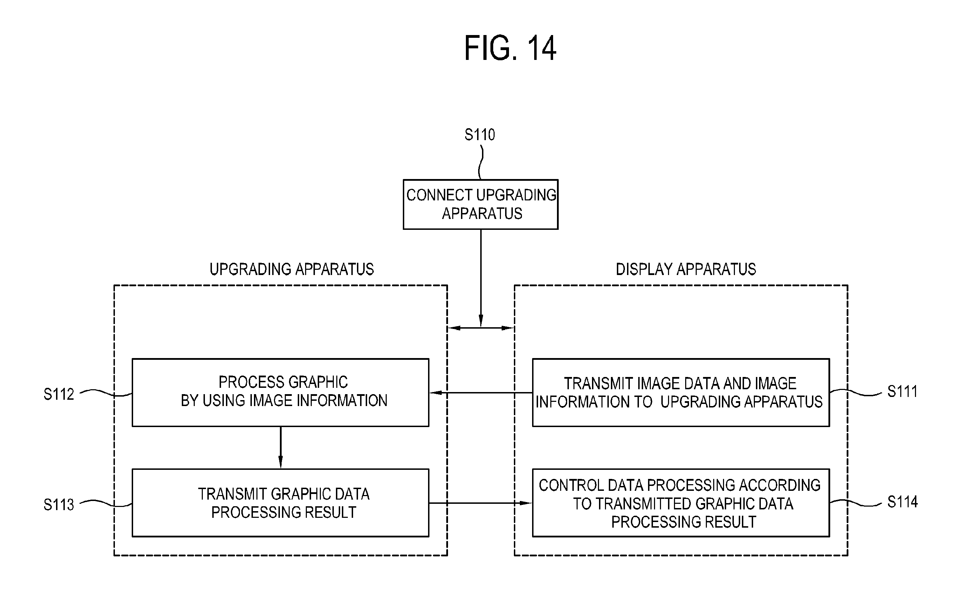

Hereinafter, a data processing method of the display system 1 according to the exemplary embodiment will be described with reference to FIGS. 14 to 25.

As shown in FIG. 14, if the upgrading apparatus 200 is connected to the display apparatus 100 (operation S110), the display apparatus 100 transmits the image data and image information to the upgrading apparatus 200 (operation S111). The display apparatus 100 inserts the following data into an image blank area and transmits the data in real-time.

| | | | |
|---|---|---|---|
| 2D/3D | Graphic processing coordinate | Degree of blending | ACK/NACK |

The second image processor 220 and the second graphic processor 230 of the upgrading apparatus 200 process the image, UI and graphic by using the input image packet information (operation S112).

The second controller 250 of the upgrading apparatus 200 transmits the image or graphic data processing result ACK/NACK back to the display apparatus 100 (operation S113).

The first controller 150 of the display apparatus 100 may perform the data processing for peripheral chips and mute of the display apparatus 100 in sync with the data processing of the upgrading apparatus 200, according to the data processing result ACK/NACK (operation S114). For example, the first controller 150 may control the FRC device, 2D/3D converter and mute adjuster in sync with the provided data processing result of the upgrading apparatus 200.

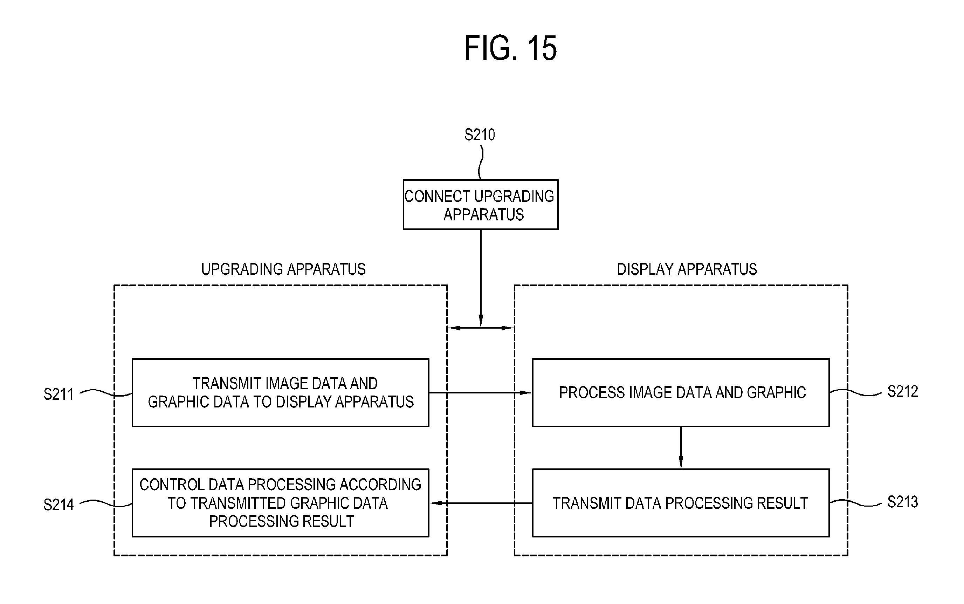

A data processing method of the display system 1 according to the second exemplary embodiment will be described with reference to FIG. 15.

If the upgrading apparatus 200 is connected to the display apparatus 100 (operation S21 0), the upgrading apparatus 200 transmits the image data and graphic data to the display apparatus 100 (operation S211).

The display apparatus 100 processes the transmitted image data and graphic data (operation S212). The data processing by the display apparatus 100 may include data processing by the FRC device, 2D/3D converter and mute adjuster.

The display apparatus 100 provides the data processing result ACK/NACK as a feedback to the upgrading apparatus 200 (operation S213).

The second controller 250 of the upgrading apparatus 200 may control the second image processor 220 and the second graphic processor 230 in sync with the data processing result of the display apparatus 100, according to the data processing result ACK/NACK provided as a feedback.

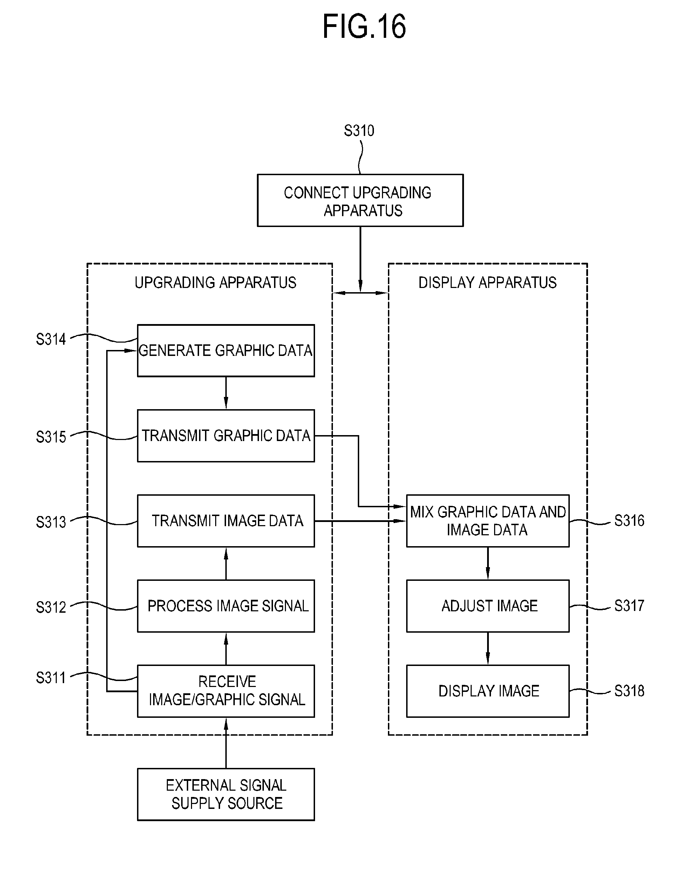

FIG. 16 is a flowchart showing a data processing method of the display system 1 in which an image signal and a data signal are input from the external signal supply source 10 to the upgrading apparatus 200.

If the upgrading apparatus 200 is connected to the display apparatus 100 (operation S310), the upgrading apparatus 200 receives image or graphic signals from the external signal supply source 10 (operation S311).

The image signal is transmitted to, and processed by, the second image processor 220 of the upgrading apparatus 200 (operation S312), and the processed image data are transmitted to the display apparatus 100 through the first and second signal connectors 110 and 210 (operation S313).

The input graphic signal is transmitted to the second graphic processor 230 of the upgrading apparatus 200 to generate graphics or UIs (operation S314), and the generated graphics or UIs are transmitted to the display apparatus 100 through the first and second signal connectors 110 and 210 (operation S315).

The display apparatus 100 mixes the received image data and graphic or UI data (S316). The mixed image data and graphic or UI data are transmitted to and adjusted by the image adjusting device 180 (operation S317), and displayed on the display 140 (operation S318).

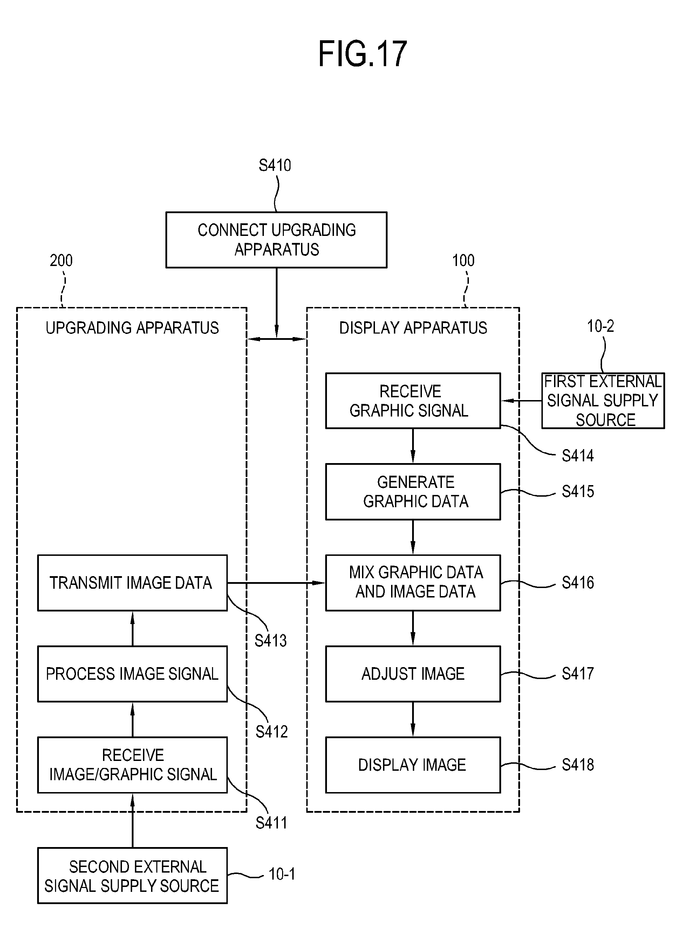

FIG. 17 is a flowchart showing a data processing method of the display system 1 in which an image signal is input by an external signal supply source 10-1 to the upgrading apparatus 200 and a graphic signal is input by another external signal supply source 10-2 to the display apparatus 100.

If the upgrading apparatus 200 is connected to the display apparatus 100 (operation S41 0), the upgrading apparatus 200 receives an image signal from the external signal supply source 10-1 (operation S411), and the display apparatus 100 receives a graphic signal from the external signal supply source 10-2 (operation S414).

The received image signal is transmitted to and processed by the second image processor 220 of the upgrading apparatus 200 (operation S412), and the processed image data are transmitted to the display apparatus 100 through the first and second signal connectors 110 and 210 (operation S413).

The input graphic signal is transmitted to the first graphic processor 130 of the display apparatus 100 (operation S414), and the first graphic processor 130 generates graphics/UIs (operation S415).

The display apparatus 100 mixes the received image data and the generated graphic or UI data (operation S416). The mixed image data and graphic or UI data are transmitted to and adjusted by the image adjusting device 180 (operation S417), and displayed on the display 140 (operation S418).

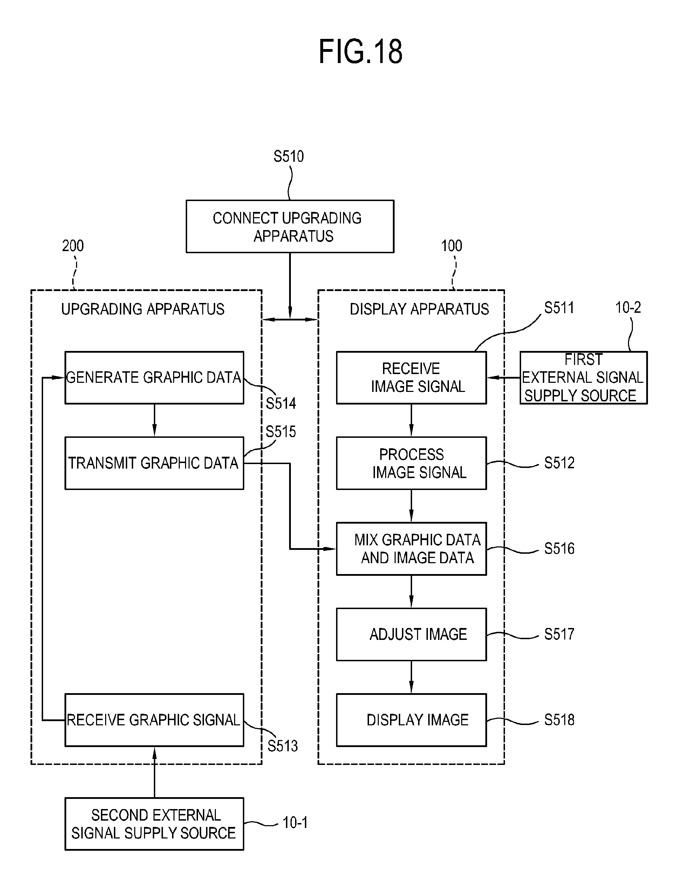

FIG. 18 is a flowchart showing a data processing method of the display system 1 in which a graphic signal is input by an external signal supply source 10-1 to the upgrading apparatus 200 and an image signal is input by another external signal supply source 10-2 to the display apparatus 100.

If the upgrading apparatus 200 is connected to the display apparatus 100 (operation S510), the display apparatus 100 receives an image signal from the external signal supply source 10-2 (operation S511), and the upgrading apparatus 200 receives a graphic signal from the external signal supply source 10-1 (operation S513).

The received image signal is transmitted to, and processed by, the first image processor 120 of the display apparatus 100 (operation S512).

The input graphic signal is transmitted to the second graphic processor 230 of the upgrading apparatus 200(operation S514) to generate graphics or UIs, and the generated graphics or UIs are transmitted to the display apparatus 100 through the first and second signal connectors 110 and 210 (operation S515).

The display apparatus 100 mixes the processed image data and the received graphic or UI data (operation S516). The mixed image data and graphic or UI data are transmitted to and adjusted by the image adjusting device 180 (operation S517), and displayed on the display 140 (operation S518).

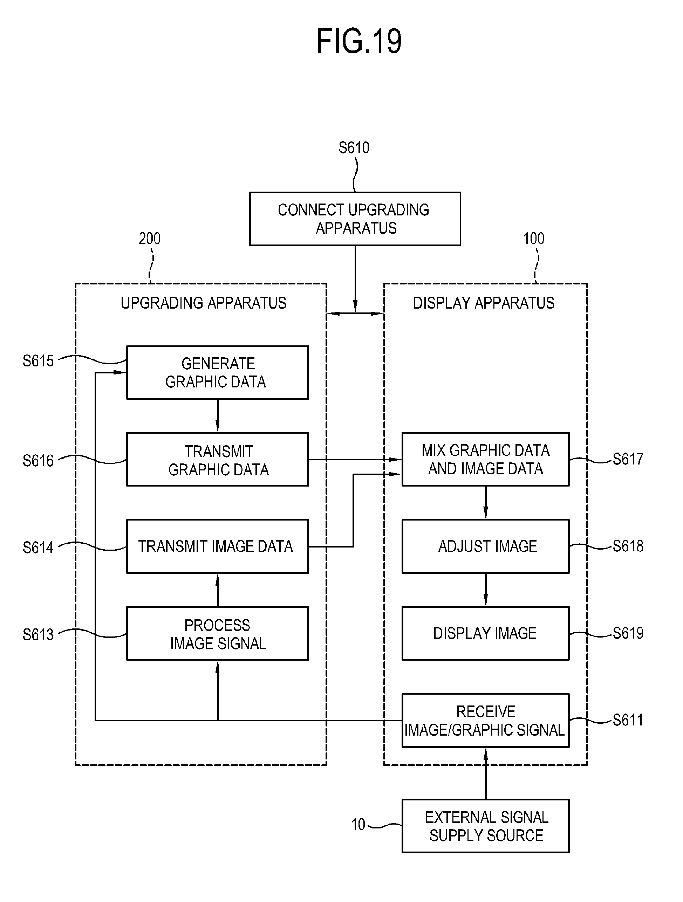

FIG. 19 is a flowchart showing another data processing method of the display system 1 in which a graphic signal and an image signal are input by an external signal supply source 10 to the display apparatus 100.

If the upgrading apparatus 200 is connected to the display apparatus 100 (operation S610), the display apparatus 100 receives an image signal and a graphic signal from the external signal supply source 10 (operation S611).

The received image signal and graphic signal are transmitted to the second image processor 220 and the second graphic processor 230, respectively, of the upgrading apparatus 200 through the first and second signal connectors 110 and 210. The second image processor 220 processes the image signal (operation S613) and transmits the processed image data to the display apparatus 100 through the first and second signal connectors 110 and 210 (operation S614). The second graphic processor 230 generates graphics/UIs with respect to the graphic signal (operation S615), and transmits the graphics or UIs to the display apparatus 100 through the first and second signal connectors 110 and 210 (operation S616).

The display apparatus 100 mixes the received image data and graphic or UI data (operation S617). The mixed image data and graphic or UI data are transmitted to and adjusted by the image adjusting device 180 (operation S618), and displayed on the display 140 (operation S619).

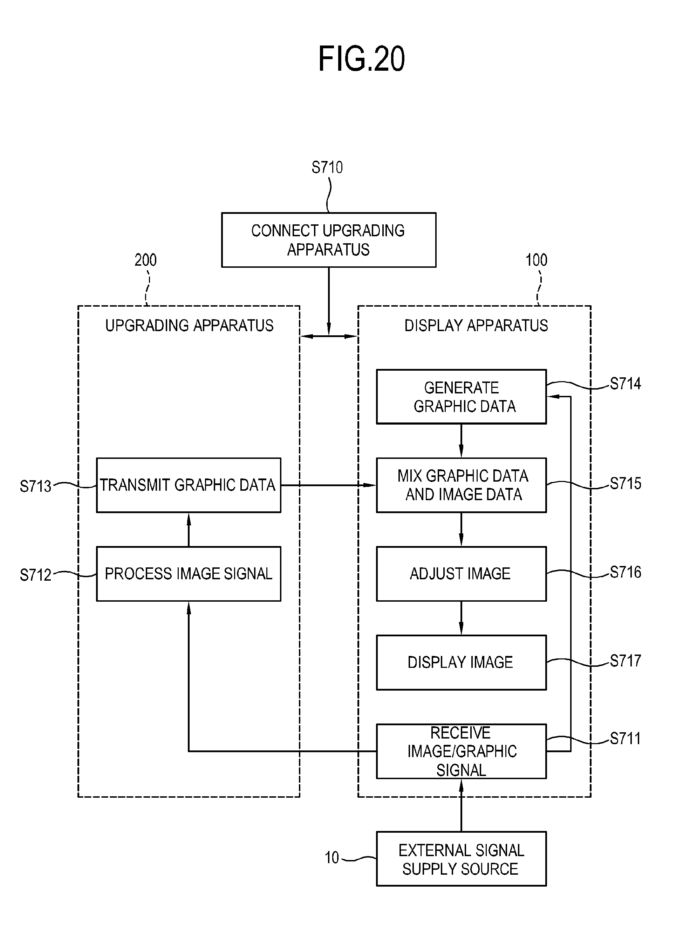

FIG. 20 is a flowchart showing another data processing method of the display system 1 in which an image signal and a graphic signal are input by an external signal supply source 10 to the display apparatus 100.

If the upgrading apparatus 200 is connected to the display apparatus 100 (operation S710), the display apparatus 100 receives an image signal and a graphic signal from the external signal supply source 10 (operation S711).

The received image signal is transmitted to the second image processor 220 of the upgrading apparatus 200 through the first and second signal connectors 110 and 210. The second image processor 220 processes the image signal (operation S712) and transmits the processed image data to the display apparatus 100 through the first and second signal connectors 110 and 210 (operation S713). The received graphic signal is transmitted to the first graphic processor 130, which generates graphics or UIs with respect to the graphic signal (operation S714).

The display apparatus 100 mixes the received image data and the generated graphic or UI data (operation S715). The mixed image data and graphic or UI data are transmitted to, and adjusted by, the image adjusting device 180 (operation S716), and displayed on the display 140 (operation S717).

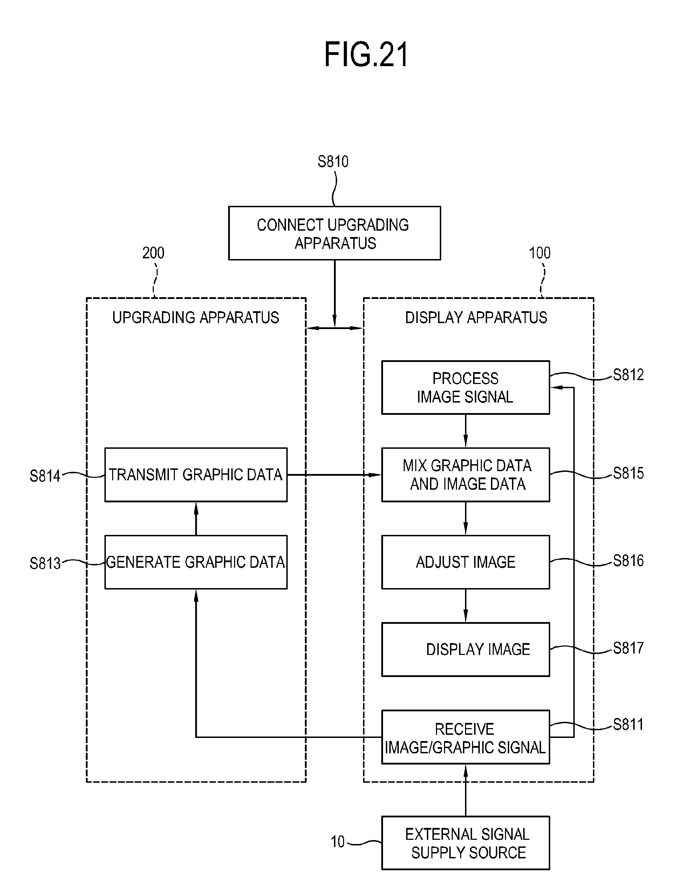

FIG. 21 is a flowchart showing another data processing method of the display system 1 in which an image signal and a graphic signal are input by an external signal supply source 10 to the display apparatus 100.

If the upgrading apparatus 200 is connected to the display apparatus 100 (operation S810), the display apparatus 100 receives an image signal and a graphic signal from the external signal supply source 10 (operation S811).

The received graphic signal is transmitted to the second graphic processor 230 of the upgrading apparatus 200 through the first and second signal connectors 110 and 210. The second graphic processor 230 generates graphics or UIs (operation S813), and transmits the generated graphics or UIs to the display apparatus 100 through the first and second signal connectors 110 and 210 (operation S814). The received image signal is transmitted to the first image processor 120, which processes the image signal (operation S812).

The display apparatus 100 mixes the processed image data and the received graphic or UI data (operation S815). The mixed image data and graphic or UI data are transmitted to and adjusted by the image adjusting device 180 (operation S816), and displayed on the display 140 (operation S817).

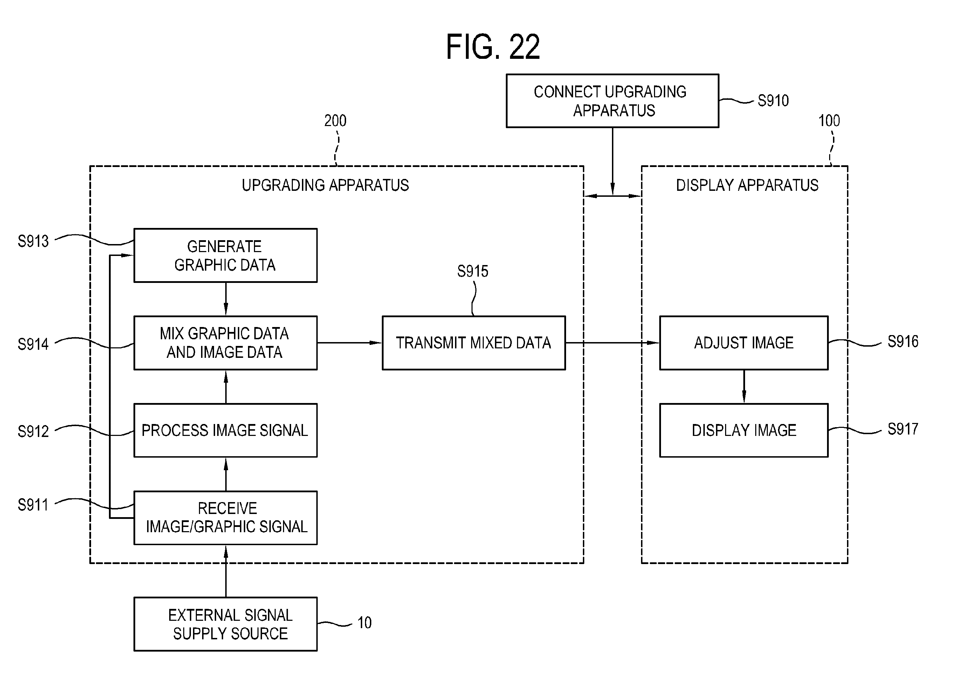

FIG. 22 is a flowchart showing another data processing method of the display system 1 in which an image signal and a graphic signal are input by an external signal supply source 10 to the upgrading apparatus 200.

If the upgrading apparatus 200 is connected to the display apparatus 100 (operation S91 0), the upgrading apparatus 200 receives an image signal and a graphic signal from the external signal supply source 10 (operation S911).

The received image signal is processed by the second image processor 220 (operation S912). The received graphic signal is processed by the second graphic processor 230 (operation S913).

The processed image data and graphic data are mixed by the second mixer 225 (operation S914). The mixed image data and graphic data are transmitted to the display apparatus 100 through the first and second signal connectors 110 and 210 (operation S915). The mixed and received image data and graphic or UI data are transmitted to and adjusted by the image adjusting device 180 (operation S916), and displayed on the display 140 (operation S917).

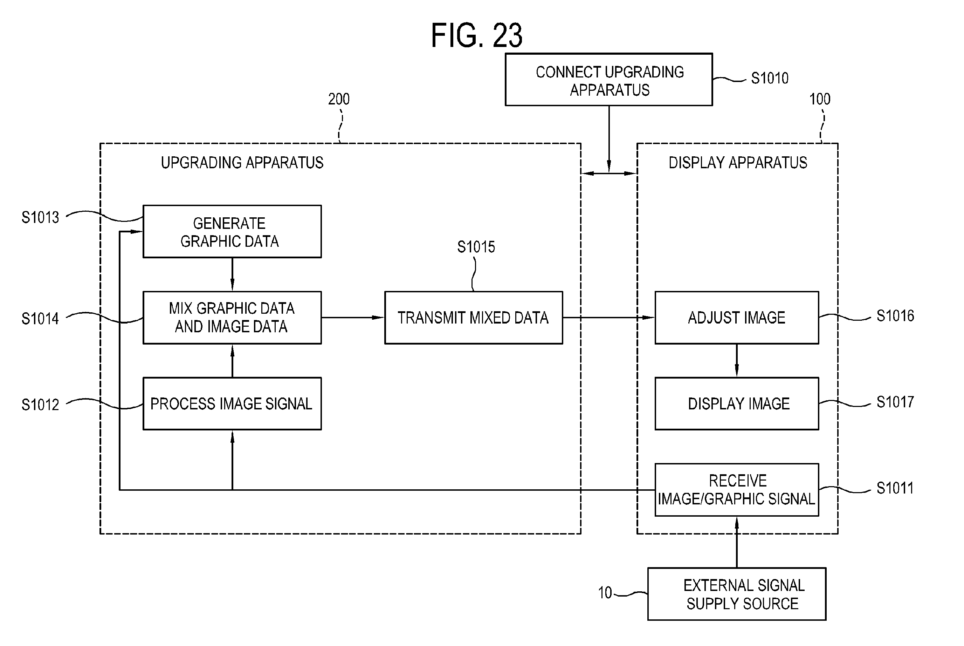

FIG. 23 is a flowchart showing another data processing method of the display system 1 in which an image signal and a graphic signal are input by an external signal supply source 10 to the display apparatus 100.

If the upgrading apparatus 200 is connected to the display apparatus 100 (operation S1010), the display apparatus 100 receives an image signal and a graphic signal from the external signal supply source 10 (operation S1011).

The input image signal and graphic signal are transmitted to the second image processor 220 and the second graphic processor 230, respectively, of the upgrading apparatus 200 through the first and second signal connectors 110 and 210.

The transmitted image signal is processed by the second image processor 220 (operation S1012). The transmitted graphic signal is processed by the second graphic processor 230 (operation S1013).

The processed image data and graphic data are mixed by the second mixer 225 (operation S1014). The mixed image data and graphic data are transmitted to the display apparatus 100 through the first and second signal connectors 110 and 210 (operation S1015). The mixed and received image data and graphic or UI data are transmitted to and adjusted by the image adjusting device 180 (operation S1016), and displayed on the display 140 (operation S1017).

The data processing method of the display apparatus 1 has been explained as above with reference to FIGS. 16 to 23. In the display system 1 according to the exemplary embodiments, the data processing method differs depending on the device receiving the image signal and/or the graphic signal from the external signal supply source, i.e., depending on the upgrading apparatus 200 and display apparatus 100. Also, the processing method for the image signal and/or the graphic signal differs depending on which of the upgrading apparatus 200 and the display apparatus 100 processes the image signal and/or the graphic signal.

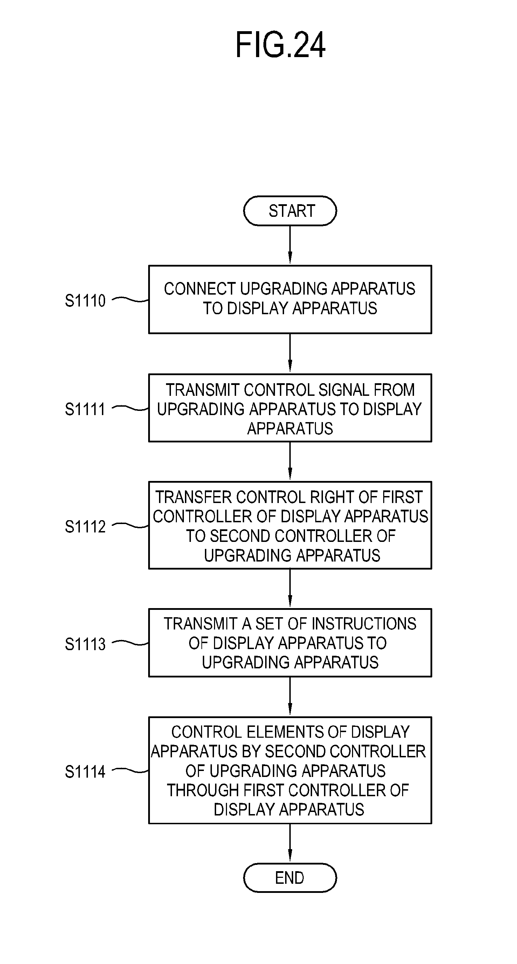

FIG. 24 is a flowchart showing a process of using both the second controller 250 of the upgrading apparatus 200 and the first controller 150 of the display apparatus 100 in the display system 1 according to the exemplary embodiment.

The second signal connector 210 of the upgrading apparatus 200 is connected to the first signal connector 110 of the display apparatus 100 (operation S1110). The upgrading apparatus 200 transmits a control signal to the display apparatus 100 through the first and second control signal connectors 112 and 212 to transfer its control right to the display apparatus 100 (operation S1111).

According to the control signal for transferring the control right, the display apparatus 100 transfers the control right of the first controller 150 to the second controller 250 of the upgrading apparatus 200, and changes to a slave mode of the upgrading apparatus 200 (operation S1112).

The display apparatus 100 transmits a set of instructions to the upgrading apparatus 200 (operation S1113).

The second controller 250 of the upgrading apparatus 200 which has assumed the control right controls the first controller 150 of the display apparatus 100 and controls components of the display apparatus 100 by a control command through the first and second control signal connectors 112 and 212 (operation S1114).

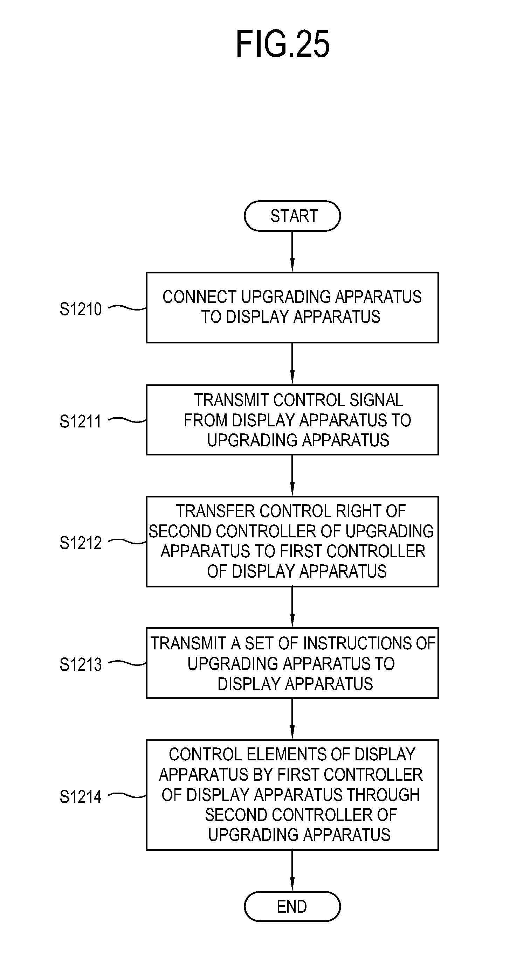

FIG. 25 is a flowchart showing another process of using both the second controller 250 of the upgrading apparatus 200 and the first controller 150 of the display apparatus 100 in the display system 1 according to the exemplary embodiment.

The second signal connector 210 of the upgrading apparatus 200 is connected to the first signal connector 110 of the display apparatus 100 (operation S1210). The display apparatus 100 transmits a control signal to the upgrading apparatus 200 through the first and second control signal connectors 112 and 212 to transfer its control right to the upgrading apparatus 200 (operation S1211).

According to the control signal for transferring the control right, the upgrading apparatus 200 transfers the control right of the second controller 250 to the first controller 150 of the display apparatus 100, and changes to a slave mode of the display apparatus 100 (operation S1212).

The upgrading apparatus 200 transmits a set of instructions to the display apparatus 100 (operation S1213).

The first controller 150 of the display apparatus 100 which has assumed the control right controls the second controller 250 of the upgrading apparatus 200 and controls components of the upgrading apparatus 200 by a control command through the first and second control signal connectors 112 and 212 (operation S1214).

As above, the display apparatus 100 which has the upgrading apparatus 200 mounted therein to properly upgrade its hardware or software, uses both the second controller 250 of the upgrading apparatus 200 and the first controller 150 of the display apparatus to form the display system 1 having a dual core.

The exemplary embodiments have been explained based on the first and second controllers 150 and 250 as an example, but are not limited thereto. Alternatively, the exemplary embodiments may also apply to the first and second GPU 160 and 260.

As described above, when the upgrading apparatus is mounted in the display apparatus, a transient phenomenon which results from a change in an image/UI/graphic processing route is restricted and a mute time may be shortened.

The upgrading apparatus may be mounted externally, and upgrade hardware or software of the display apparatus to easily apply a new UI or graphic.

The upgrading apparatus may be mounted from the outside of the display apparatus, to upgrade hardware or software of the display apparatus and apply various images input through a new interface.

The display apparatus which has the upgrading apparatus mounted therein to upgrade hardware or software utilizes both the CPU of the upgrading apparatus and the CPU of the display apparatus to thereby process data more promptly.

Even if a signal has a format that is not supported by the display apparatus, the upgrading apparatus may be connected to the display apparatus and process external signals in various types and formats.

The display apparatus may receive various external signals through the upgrading apparatus to thereby enhance its extensibility.

Although a few exemplary embodiments have been shown and described, it will be appreciated by those skilled in the art that changes may be made in these exemplary embodiments without departing from the principles and spirit of the disclosure, the range of which is defined in the appended claims and their equivalents.

## Claims

1. A display apparatus comprising:
at least one signal connector which is connected to an external upgrading apparatus to upgrade an image signal processing operation of the display apparatus and a graphic processing operation of the display apparatus, and transmits and receives a data processing result between the display apparatus and the upgrading apparatus; and
a controller which controls the display apparatus based on the data processing result transmitted by the upgrading apparatus through the at least one signal connector.

2. The display apparatus according to claim 1, wherein the data processing result comprises a graphic processing result with respect to image information.

3. The display apparatus according to claim 2, further comprising an image adjusting device which adjusts an image signal displayed on a display of the display apparatus, wherein the controller controls the image adjusting device based on the graphic processing result transmitted by the upgrading apparatus.

4. The display apparatus according to claim 1, wherein the data processing result is inserted into a blank area of image data for reception or transmission.

5. The display apparatus according to claim 1, wherein the at least one signal connector comprises a control signal connector which transmits and receives a control signal to or from the upgrading apparatus.

6. The display apparatus according to claim 5, wherein the controller is controlled by a second controller of the upgrading apparatus according to the received control signal.

7. The display apparatus according to claim 5, wherein the controller controls the second controller of the upgrading apparatus according to the transmitted control signal.

8. The display apparatus according to claim 5, wherein the control signal connector comprises a high definition multimedia interface (HDMI) Ethernet Channel (HEC).

9. The display apparatus according to claim 5, wherein the controller transmits a set of instructions to the upgrading apparatus upon receiving the control signal.

10. The display apparatus according to claim 1, further comprising a storage which stores device information of the display apparatus, wherein the controller transmits the device information to the upgrading apparatus to enable the upgrading apparatus to convert a format of a signal and output the signal in a format that can be processed by an image processor of the display apparatus.

11. An upgrading apparatus of a display apparatus, the upgrading apparatus comprising:
at least one signal connector to which the display apparatus is connected to, and which transmits and receives a data processing result between the display apparatus and the upgrading apparatus;
an image processor which processes an image signal;
a graphic processor which processes a graphic; and
a controller which controls the upgrading apparatus based on the data processing result transmitted by the display apparatus through the signal connector.

12. The upgrading apparatus according to claim 11, wherein the data processing result comprises a data processing result which is performed by at least one of a frame rate converter (FRC), a 2D/3D converter and a mute adjuster of the display apparatus.

13. A display system comprising:
a display apparatus which comprises a first image processor which processes an image signal, a first graphic processor which processes a graphic, a first signal connector which transmits and receives a data processing result, and a first controller which performs a control operation based on the data processing result if the data processing result is transmitted through the first signal connector; and
an upgrading apparatus which comprises a second image processor which processes an image signal, a second graphic processor which processes a graphic with respect to image information, a second signal connector which is connected to the first signal connector of the display apparatus and transmits and receives a data processing result, and a second controller which performs a control operation based on the data processing result if the data processing result is transmitted by the display apparatus through the second signal connector.

14. The display system according to claim 13, wherein the image signal and image information processed by the second image processor and second graphic processor of the upgrading apparatus are transmitted by the display apparatus through the first and second signal connectors.

15. A data processing method of a display system comprising:
connecting an upgrading apparatus to a display apparatus;
processing image data or graphic data by the upgrading apparatus;
transmitting a data processing result of the upgrading apparatus to a display apparatus; and
controlling the display apparatus according to the transmitted data processing result.
